# EUROPEAN PATENT APPLICATION

(11) **EP 4 788 038 A1**
(43) Date of publication of application: **05.08.2026**
(21) Application number: 26156505.5
(22) Date of filing: 01.04.2021
(51) Int. Cl.: H04W 74/08

(54) **RANDOM ACCESS METHOD, APPARATUS, AND SYSTEM**

(30) Priority: 03.04.2020 CN 202010260718
(62) Divisional of application: 21781790.7
(71) Applicant: Huawei Technologies Co., Ltd., Shenzhen, Guangdong 518129 (CN)
(72) Inventor: HOU, Hailong, SHENZHEN, 518129 (CN); LI, Chaojun, SHENZHEN, 518129 (CN); FEI, Yongqiang, SHENZHEN, 518129 (CN); CHEN, Lei, SHENZHEN, 518129 (CN); ZHENG, Juan, SHENZHEN, 518129 (CN)
(74) Representative: Roth, Sebastian

(57) **Abstract**

This application provides a random access method, an apparatus, and a system. The method includes: A network device determines M RACH resource sets, where the M RACH resource sets correspond to N terminal types, the N terminal types are determined based on bandwidth types and/or random access types of terminals, and M and N are positive integers; and then sends RACH configuration information to at least one terminal, where the RACH configuration information indicates the M RACH resource sets, the M RACH resource sets are used by the at least one terminal to send a random access request to the network device, and a bandwidth type of any one of the at least one terminal belongs to the bandwidth types for determining the N terminal types. According to the technical solution of this application, terminals of various bandwidth types can be more efficiently connected to the network device.

## Description

This application claims priority to Chinese Patent Application No. 202010260718.X, filed with the China National Intellectual Property Administration on April 3, 2020 and entitled "RANDOM ACCESS METHOD, APPARATUS, AND SYSTEM", which is incorporated herein by reference in its entirety.

### TECHNICAL FIELD

A terminal usually needs to perform a random access procedure with a network device, to complete uplink time synchronization with the network device and establish a radio resource control connection to the network device, so that the terminal and the network device exchange service data based on the radio resource control connection.

With development of internet of things application technologies, bandwidth types of terminals tend to be diversified. For example, bandwidth capabilities of some terminals may be 5 MHz, bandwidth capabilities of some terminals may be 10 MHz, bandwidth capabilities of some terminals may be 20 MHz, and bandwidth capabilities of some terminals may be 100 MHz. Accordingly, for a same network device, the network device may need to be connected to terminals of a plurality of bandwidth types.

Currently, a network device usually sends random access channel (random access channel, RACH) resource configuration information to a terminal in an initial downlink bandwidth of 20 MHz, so that the terminal selects, based on the received RACH resource configuration information, a corresponding RACH resource for a random access procedure with the network device. In this case, terminals of various bandwidth types all need to use the completely same RACH resource configuration information. Consequently, some terminals may fail to efficiently connect to the network device due to a limitation of bandwidth capabilities of the terminals.

### SUMMARY

Embodiments of this application provide a random access method, an apparatus, and a system, to help terminals of various bandwidth types connect to a network device more efficiently.

According to a first aspect, a random access method is provided. The method may be performed by a network device, or may be performed by a module, a chip, or a system on chip deployed in the network device. The method includes: determining M random access channel RACH resource sets, where the M RACH resource sets correspond to N terminal types, the N terminal types are determined based on bandwidth types and/or random access types of terminals, and M and N are positive integers; and sending RACH configuration information to at least one terminal, where the RACH configuration information indicates the M RACH resource sets, the M RACH resource sets are used by the at least one terminal to send a random access request to the network device, and a bandwidth type of any one of the at least one terminal belongs to the bandwidth types for determining the N terminal types.

In conclusion, the N terminal types supported by the network device may be flexibly configured based on at least one bandwidth type and/or at least one random access type, and the M RACH resource sets are configured for the N terminal types, where M and N are positive integers. Terminals of different bandwidth types may separately send random access requests to the network device based on a same RACH resource set or different RACH resource sets, to initiate random access procedures. This helps terminals of various bandwidth types connect to the network device more efficiently.

In a possible implementation, for one of the M RACH resource sets, the network device may determine at least one terminal type corresponding to the RACH resource set, determine at least one terminal device that performs a random access procedure based on the at least one terminal type, and then send configuration information to the at least one terminal device. The network device allocates RACH resources based on bandwidth types of terminals and random access types, so that resource configuration in a random access procedure is more flexible, and resource utilization is improved.

In a possible implementation, any one of the N terminal types is determined based on one of at least one bandwidth type and/or one of at least one random access type, and a bandwidth type of any one of the at least one terminal is one of the at least one bandwidth type.

In a possible implementation, the RACH configuration information further indicates a first RACH configuration, where the first RACH configuration is that the M RACH resource sets correspond to the N terminal types, M is less than N, and M is equal to 1.

In a possible implementation, the RACH configuration information further indicates a second RACH configuration, where the second RACH configuration is that the M RACH resource sets correspond to the N terminal types, M is equal to N, and M is greater than 1.

In a possible implementation, the RACH configuration information further indicates a third RACH configuration, where the third RACH configuration is that the M RACH resource sets correspond to the N terminal types, M is less than N, and M is greater than 1.

In a possible implementation, the RACH configuration information further indicates a fourth RACH configuration, where the fourth RACH configuration is that the M RACH resource sets correspond to the N terminal types, M is equal to N, and M is equal to 1.

In a possible implementation, the RACH configuration information further indicates one of X RACH configurations, where X is a positive integer, and the X RACH configurations include at least two of the following RACH configurations:
a first RACH configuration, where the first RACH configuration is that the M RACH resource sets correspond to the N terminal types, M is less than N, and M is equal to 1;
a second RACH configuration, where the second RACH configuration is that the M RACH resource sets correspond to the N terminal types, M is equal to N, and M is greater than 1;
a third RACH configuration, where the RACH configuration information indicates the third RACH configuration, the third RACH configuration is that the M RACH resource sets correspond to the N terminal types, M is less than N, and M is greater than 1; or
a fourth RACH configuration, where the fourth RACH configuration is that the M RACH resource sets correspond to the N terminal types, M is equal to N, and M is equal to 1.

In a possible implementation, the RACH configuration information further indicates that the N terminal types correspond to at least one uplink initial bandwidth part (uplink initial bandwidth part, UL initial BWP).

In a possible implementation, the sending RACH configuration information to at least one terminal includes: sending the RACH configuration information to the at least one terminal in at least one downlink initial bandwidth part (downlink initial bandwidth part, DL initial BWP).

In a possible implementation, the sending RACH configuration information to at least one terminal includes: sending signaling to the at least one terminal, where the signaling includes the RACH configuration information, and the signaling includes at least one of the following types of signaling: media access control control element (media access control-control element, MACCE) signaling, downlink control information (downlink control information, DCI) signaling, radio resource control (radio resource control, RRC) signaling, and system information block typel (system information block-typel, SIB1) signaling.

In a possible implementation, the method further includes: receiving a random access request from a current terminal in the at least one terminal; determining a target RACH resource set corresponding to the random access request; and responding to the random access request based on a physical uplink shared channel (physical uplink shared channel, PUSCH) resource set corresponding to the target RACH resource set.

In a possible implementation, the random access request includes a bandwidth type of the current terminal, and the random access request is sent via message1 or messageA.

In a possible implementation, the bandwidth type of the current terminal is carried on a PRACH of message1, or the bandwidth type of the current terminal is carried on a PRACH or a PUSCH of messageA.

In a possible implementation, the at least one bandwidth type includes at least one of the following bandwidth types: NR_legacy, NR_REDCAP type1, and NR_REDCAP type2;
the at least one random access type includes at least one of the following random access types: 4-step RACH, 4-step RACH&EDT, 2-step RACH, and 2-step RACH&EDT; and
the N terminal types include at least one of the following terminal types:
   a terminal type determined based on NR_legacy and 4-step RACH;
   a terminal type determined based on NR_legacy and 4-step RACH&EDT;
   a terminal type determined based on NR_legacy and 2-step RACH;
   a terminal type determined based on NR_legacy and 2-step RACH&EDT;
   a terminal type determined based on NR_REDCAP type1 and 4-step RACH;
   a terminal type determined based on NR_REDCAP type1 and 4-step RACH&EDT;
   a terminal type determined based on NR_REDCAP type1 and 2-step RACH;
   a terminal type determined based on NR_REDCAP type1 and 2-step RACH&EDT;
   a terminal type determined based on NR_REDCAP type2 and 4-step RACH;
   a terminal type determined based on NR_REDCAP type2 and 4-step RACH&EDT;
   a terminal type determined based on NR_REDCAP type2 and 2-step RACH; or
   a terminal type determined based on NR_REDCAP type2 and 2-step RACH&EDT.

According to a second aspect, a random access method is provided. For beneficial effects, refer to the descriptions in the first aspect. The method may be performed by a terminal, or may be performed by a module, a chip, or a system on chip deployed in the terminal. The method includes: receiving RACH configuration information from a network device, where the RACH configuration information indicates M RACH resource sets, the M RACH resource sets correspond to N terminal types, the N terminal types are determined based on bandwidth types and/or random access types of terminals, and M and N are positive integers; and determining, based on the configuration information, a target RACH resource set used by a current terminal to send a random access request to the network device, where a bandwidth type of the current terminal belongs to the bandwidth types for determining the N terminal types.

In a possible implementation, any one of the N terminal types is determined based on one of at least one bandwidth type and/or one of at least one random access type, and a bandwidth type of any one of the at least one terminal is one of the at least one bandwidth type.

In a possible implementation, the RACH configuration information further indicates a first RACH configuration, where the first RACH configuration is that the M RACH resource sets correspond to the N terminal types, M is less than N, and M is equal to 1.

In a possible implementation, the RACH configuration information further indicates a second RACH configuration, where the second RACH configuration is that the M RACH resource sets correspond to the N terminal types, M is equal to N, and M is greater than 1.

In a possible implementation, the RACH configuration information further indicates a third RACH configuration, where the third RACH configuration is that the M RACH resource sets correspond to the N terminal types, M is less than N, and M is greater than 1.

In a possible implementation, the RACH configuration information further indicates a fourth RACH configuration, where the fourth RACH configuration is that the M RACH resource sets correspond to the N terminal types, M is equal to N, and M is equal to 1.

In a possible implementation, the RACH configuration information further indicates one of X RACH configurations, where X is a positive integer, and the X RACH configurations include at least two of the following RACH configurations:
a first RACH configuration, where the first RACH configuration is that the M RACH resource sets correspond to the N terminal types, M is less than N, and M is equal to 1;
a second RACH configuration, where the second RACH configuration is that the M RACH resource sets correspond to the N terminal types, M is equal to N, and M is greater than 1;
a third RACH configuration, where the third RACH configuration is that the M RACH resource sets correspond to the N terminal types, M is less than N, and M is greater than 1; or
a fourth RACH configuration, where the fourth RACH configuration is that the M RACH resource sets correspond to the N terminal types, M is equal to N, and M is equal to 1.

In a possible implementation, the receiving RACH configuration information from a network device includes: receiving signaling from the network device, where the signaling includes the configuration information, and the signaling includes at least one of the following types of signaling: MACCE signaling, DCI signaling, SIB1 signaling, and RRC signaling.

In a possible implementation, the determining, based on the RACH configuration information, a target RACH resource set used by a current terminal to send a random access request to the network device includes: determining, based on the RACH configuration information and a target terminal type of the current terminal, the target RACH resource set used by the current terminal to send the random access request to the network device, where the target terminal type of the current terminal is determined based on a random access type supported by the current terminal and the bandwidth type of the current terminal.

In a possible implementation, the RACH configuration information further indicates that the N terminal types correspond to at least one UL initial BWP; and the method further includes: determining, based on the configuration information, a target UL initial BWP corresponding to the target terminal type; and sending the random access request to the network device on the target UL initial BWP based on the target RACH resource set.

In a possible implementation, the random access request includes the bandwidth type of the current terminal, and the random access request is sent via message1 or messageA.

In a possible implementation, the bandwidth type of the current terminal is carried on a PRACH of message1, or the bandwidth type of the current terminal is carried on a PRACH or a PUSCH of messageA.

In a possible implementation, the at least one bandwidth type includes at least one of the following bandwidth types: NR_legacy, NR_REDCAP type1, and NR_REDCAP type2;
the at least one random access type includes at least one of the following random access types: 4-step RACH, 4-step RACH&EDT, 2-step RACH, and 2-step RACH&EDT; and
the N terminal types include at least one of the following terminal types:
   a terminal type determined based on NR_legacy and 4-step RACH;
   a terminal type determined based on NR_legacy and 4-step RACH&EDT;
   a terminal type determined based on NR_legacy and 2-step RACH;
   a terminal type determined based on NR_legacy and 2-step RACH&EDT;
   a terminal type determined based on NR_REDCAP type1 and 4-step RACH;
   a terminal type determined based on NR_REDCAP type1 and 4-step RACH&EDT;
   a terminal type determined based on NR_REDCAP type1 and 2-step RACH;
   a terminal type determined based on NR_REDCAP type1 and 2-step RACH&EDT;
   a terminal type determined based on NR_REDCAP type2 and 4-step RACH;
   a terminal type determined based on NR_REDCAP type2 and 4-step RACH&EDT;
   a terminal type determined based on NR_REDCAP type2 and 2-step RACH; or
   a terminal type determined based on NR_REDCAP type2 and 2-step RACH&EDT.

According to a third aspect, a communication apparatus is provided. For beneficial effects, refer to the descriptions in the first aspect. The communication apparatus may be a network device, or may be a module, a chip, or a system on chip deployed in the network device. The communication apparatus includes: a processing unit, configured to determine M RACH resource sets, where the M RACH resource sets correspond to N terminal types, the N terminal types are determined based on bandwidth types and/or random access types of terminals, and M and N are positive integers; and a transceiver unit, configured to send RACH configuration information to at least one terminal, where the RACH configuration information indicates the M RACH resource sets, the M RACH resource sets are used by the at least one terminal to send a random access request to the network device, and a bandwidth type of any one of the at least one terminal belongs to the bandwidth types for determining the N terminal types.

In a possible implementation, the processing unit is configured to: for one of the M RACH resource sets, determine at least one terminal type corresponding to the RACH resource set, and determine at least one terminal device that performs a random access procedure based on the at least one terminal type. The transceiver unit is configured to send configuration information to the at least one terminal device. The network device allocates RACH resources based on bandwidth types of terminals and random access types, so that resource configuration in a random access procedure is more flexible, and resource utilization is improved.

In a possible implementation, any one of the N terminal types is determined based on one of at least one bandwidth type and/or one of at least one random access type, and a bandwidth type of any one of the at least one terminal is one of the at least one bandwidth type.

In a possible implementation, the RACH configuration information further indicates a first RACH configuration, where the first RACH configuration is that the M RACH resource sets correspond to the N terminal types, M is less than N, and M is equal to 1.

In a possible implementation, the RACH configuration information further indicates a second RACH configuration, where the second RACH configuration is that the M RACH resource sets correspond to the N terminal types, M is equal to N, and M is greater than 1.

In a possible implementation, the RACH configuration information further indicates a third RACH configuration, where the third RACH configuration is that the M RACH resource sets correspond to the N terminal types, M is less than N, and M is greater than 1.

In a possible implementation, the RACH configuration information further indicates a fourth RACH configuration, where the fourth RACH configuration is that the M RACH resource sets correspond to the N terminal types, M is equal to N, and M is equal to 1.

In a possible implementation, the RACH configuration information further indicates one of X RACH configurations, where X is a positive integer, and the X RACH configurations include at least two of the following RACH configurations:
a first RACH configuration, where the first RACH configuration is that the M RACH resource sets correspond to the N terminal types, M is less than N, and M is equal to 1;
a second RACH configuration, where the second RACH configuration is that the M RACH resource sets correspond to the N terminal types, M is equal to N, and M is greater than 1;
a third RACH configuration, where the RACH configuration information indicates the third RACH configuration, the third RACH configuration is that the M RACH resource sets correspond to the N terminal types, M is less than N, and M is greater than 1; or
a fourth RACH configuration, where the fourth RACH configuration is that the M RACH resource sets correspond to the N terminal types, M is equal to N, and M is equal to 1.

In a possible implementation, the RACH configuration information further indicates that the N terminal types correspond to at least one UL initial BWP.

In a possible implementation, the transceiver unit is specifically configured to send the RACH configuration information to the at least one terminal in at least one DL initial BWP.

In a possible implementation, the transceiver unit is specifically configured to send signaling to the at least one terminal, where the signaling includes the RACH configuration information, and the signaling includes at least one of the following types of signaling: MACCE signaling, DCI signaling, RRC signaling, and SIB1 signaling.

In a possible implementation, the transceiver unit is further configured to receive a random access request from a current terminal in the at least one terminal; and the processing unit is further configured to: determine a target RACH resource set corresponding to the random access request; and respond to the random access request based on a PUSCH resource set corresponding to the target RACH resource set.

In a possible implementation, the random access request includes a bandwidth type of the current terminal, and the random access request is sent via message1 or messageA.

In a possible implementation, the bandwidth type of the current terminal is carried on a PRACH of message1, or the bandwidth type of the current terminal is carried on a PRACH or a PUSCH of messageA.

In a possible implementation, the at least one bandwidth type includes at least one of the following bandwidth types: NR_legacy, NR_REDCAP type1, and NR_REDCAP type2;
the at least one random access type includes at least one of the following random access types: 4-step RACH, 4-step RACH&EDT, 2-step RACH, and 2-step RACH&EDT; and
the N terminal types include at least one of the following terminal types:
   a terminal type determined based on NR_legacy and 4-step RACH;
   a terminal type determined based on NR_legacy and 4-step RACH&EDT;
   a terminal type determined based on NR_legacy and 2-step RACH;
   a terminal type determined based on NR_legacy and 2-step RACH&EDT;
   a terminal type determined based on NR_REDCAP type1 and 4-step RACH;
   a terminal type determined based on NR_REDCAP type1 and 4-step RACH&EDT;
   a terminal type determined based on NR_REDCAP type1 and 2-step RACH;
   a terminal type determined based on NR_REDCAP type1 and 2-step RACH&EDT;
   a terminal type determined based on NR_REDCAP type2 and 4-step RACH;
   a terminal type determined based on NR_REDCAP type2 and 4-step RACH&EDT;
   a terminal type determined based on NR_REDCAP type2 and 2-step RACH; or
   a terminal type determined based on NR_REDCAP type2 and 2-step RACH&EDT.

According to a fourth aspect, a communication apparatus is provided. For beneficial effects, refer to the descriptions in the first aspect. The communication apparatus may be a terminal, or may be a module, a chip, or a system on chip deployed in the terminal. The communication apparatus includes: a transceiver unit, configured to receive RACH configuration information from a network device, where the RACH configuration information indicates M RACH resource sets, the M RACH resource sets correspond to N terminal types, the N terminal types are determined based on bandwidth types and/or random access types of terminals, and M and N are positive integers; and a processing unit, configured to determine, based on the configuration information, a target RACH resource set used by a current terminal to send a random access request to the network device, where a bandwidth type of the current terminal belongs to the bandwidth types for determining the N terminal types.

In a possible implementation, any one of the N terminal types is determined based on one of at least one bandwidth type and/or one of at least one random access type, and a bandwidth type of any one of the at least one terminal is one of the at least one bandwidth type.

In a possible implementation, the RACH configuration information further indicates a first RACH configuration, where the first RACH configuration is that the M RACH resource sets correspond to the N terminal types, M is less than N, and M is equal to 1.

In a possible implementation, the RACH configuration information further indicates a second RACH configuration, where the second RACH configuration is that the M RACH resource sets correspond to the N terminal types, M is equal to N, and M is greater than 1.

In a possible implementation, the RACH configuration information further indicates a third RACH configuration, where the third RACH configuration is that the M RACH resource sets correspond to the N terminal types, M is less than N, and M is greater than 1.

In a possible implementation, the RACH configuration information further indicates a fourth RACH configuration, where the fourth RACH configuration is that the M RACH resource sets correspond to the N terminal types, M is equal to N, and M is equal to 1.

In a possible implementation, the RACH configuration information further indicates one of X RACH configurations, where X is a positive integer, and the X RACH configurations include at least two of the following RACH configurations:
a first RACH configuration, where the first RACH configuration is that the M RACH resource sets correspond to the N terminal types, M is less than N, and M is equal to 1;
a second RACH configuration, where the second RACH configuration is that the M RACH resource sets correspond to the N terminal types, M is equal to N, and M is greater than 1;
a third RACH configuration, where the third RACH configuration is that the M RACH resource sets correspond to the N terminal types, M is less than N, and M is greater than 1; or
a fourth RACH configuration, where the fourth RACH configuration is that the M RACH resource sets correspond to the N terminal types, M is equal to N, and M is equal to 1.

In a possible implementation, the transceiver unit is specifically configured to receive signaling from the network device, where the signaling includes the configuration information, and the signaling includes at least one of the following types of signaling: MACCE signaling, DCI signaling, SIB1 signaling, and RRC signaling.

In a possible implementation, the processing unit is specifically configured to determine, based on the RACH configuration information and a target terminal type of the current terminal, the target RACH resource set used by the current terminal to send the random access request to the network device, where the target terminal type of the current terminal is determined based on a random access type supported by the current terminal and the bandwidth type of the current terminal.

In a possible implementation, the RACH configuration information further indicates that the N terminal types correspond to at least one UL initial BWP; the processing unit is further configured to determine, based on the configuration information, a target UL initial BWP corresponding to the target terminal type; and the transceiver unit is further configured to send the random access request to the network device on the target UL initial BWP based on the target RACH resource set.

In a possible implementation, the random access request includes the bandwidth type of the current terminal, and the random access request is sent via message1 or messageA.

In a possible implementation, the bandwidth type of the current terminal is carried on a PRACH of message1, or the bandwidth type of the current terminal is carried on a PRACH or a PUSCH of messageA.

In a possible implementation, the at least one bandwidth type includes at least one of the following bandwidth types: NR_legacy, NR_REDCAP type1, and NR_REDCAP type2;
the at least one random access type includes at least one of the following random access types: 4-step RACH, 4-step RACH&EDT, 2-step RACH, and 2-step RACH&EDT; and
the N terminal types include at least one of the following terminal types:
   a terminal type determined based on NR_legacy and 4-step RACH;
   a terminal type determined based on NR_legacy and 4-step RACH&EDT;
   a terminal type determined based on NR_legacy and 2-step RACH;
   a terminal type determined based on NR_legacy and 2-step RACH&EDT;
   a terminal type determined based on NR_REDCAP type1 and 4-step RACH;
   a terminal type determined based on NR_REDCAP type1 and 4-step RACH&EDT;
   a terminal type determined based on NR_REDCAP type1 and 2-step RACH;
   a terminal type determined based on NR_REDCAP type1 and 2-step RACH&EDT;
   a terminal type determined based on NR_REDCAP type2 and 4-step RACH;
   a terminal type determined based on NR_REDCAP type2 and 4-step RACH&EDT;
   a terminal type determined based on NR_REDCAP type2 and 2-step RACH; or
   a terminal type determined based on NR_REDCAP type2 and 2-step RACH&EDT.

According to a fifth aspect, a communication apparatus is provided, and includes a memory and a processor. The memory stores instructions/code. When executing the instructions/code stored in the memory, the processor implements the method according to any implementation of the first aspect.

According to a sixth aspect, a communication apparatus is provided, and includes a memory and a processor. The memory stores instructions/code. When executing the instructions/code stored in the memory, the processor implements the method according to any implementation of the second aspect.

According to a seventh aspect, a chip is provided, and includes a processor, configured to invoke a computer program from a memory and run the computer program, so that a communication apparatus on which the chip is installed implements the method according to any implementation of the first aspect or the method according to any implementation of the second aspect.

According to an eighth aspect, a computer-readable storage medium is provided, and is configured to store instructions/code. When the instructions/code are/is executed by a processor of an electronic device, the electronic device is enabled to implement the method according to any implementation of the first aspect or the method according to any implementation of the second aspect.

According to a ninth aspect, a computer program product including instructions/code is provided. When the computer program product runs on an electronic device, the electronic device implements the method according to any implementation of the first aspect or the method according to any implementation of the second aspect.

According to a tenth aspect, a communication system is provided, and includes the communication apparatus according to any implementation of the third aspect and the communication apparatus according to any implementation of the fourth aspect, or includes the communication apparatus according to the fifth aspect and the communication apparatus according to the sixth aspect.

### BRIEF DESCRIPTION OF DRAWINGS

FIG. 1 is an example of a system architecture diagram of a wireless communication system according to an embodiment of this application;
FIG. 2 is a schematic diagram showing that a terminal and a network device perform a random access procedure whose random access type is 4-step RACH;
FIG. 3 is a schematic flowchart of a random access method according to an embodiment of this application;
FIG. 4 is a schematic flowchart of another random access method according to an embodiment of this application;
FIG. 5 is a schematic diagram showing that a network device sends signaling to terminals of at least two bandwidth types in different DL initial BWPs;
FIG. 6 is a schematic diagram of a structure of a communication apparatus according to an embodiment of this application;
FIG. 7 is a schematic diagram of a structure of another communication apparatus according to an embodiment of this application;
FIG. 8 is a schematic diagram of a structure of another communication apparatus according to an embodiment of this application; and
FIG. 9 is a schematic diagram of a structure of another communication apparatus according to an embodiment of this application.

### DESCRIPTION OF EMBODIMENTS

The following describes the technical solutions in embodiments of this application with reference to the accompanying drawings in embodiments of this application.

In embodiments of this application, a terminal is an electronic device having a wireless communication function. The terminal may be deployed on land, for example, deployed in specified indoor space or on a vehicle running on the ground; may be deployed on water, for example, deployed in a ship; or may be deployed in the air, for example, deployed on an airplane, a balloon, or a satellite. The terminal may be user equipment (user equipment, UE), and the UE may be a handheld device, a vehicle-mounted device, a wearable device, or a computing device that has a wireless communication function. For example, the UE may be a mobile phone (mobile phone), a tablet computer, or a computer having a wireless transceiver function. Alternatively, the terminal may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like.

In embodiments of this application, a communication apparatus configured to implement a function of the terminal may be the terminal, or may be another apparatus configured to support the terminal in implementing the function of the terminal, for example, a chip deployed in the terminal. In some embodiments, the chip includes a processor, configured to invoke a computer program from a memory and run the computer program, so that the terminal on which the chip is installed implements a method performed by a terminal according to any embodiment of this application.

The terminal provided in embodiments of this application may include a memory and a processor. The memory is configured to store executable code/instructions. When executing the executable code/instructions, the processor implements a random access method that is performed by a terminal according to any embodiment of this application.

An embodiment of this application further provides a computer-readable storage medium, configured to store executable code/instructions. When the executable code/instructions is/are executed by a processor of an electronic device, the electronic device is enabled to implement a random access method performed by a terminal according to any embodiment of this application.

An embodiment of this application further provides a computer program product including executable code/instructions. When the computer program product runs on an electronic device, the electronic device implements a random access method performed by a terminal according to any embodiment of this application.

In embodiments of this application, a network device includes a base station (base station, BS). The base station is a device that is deployed in a radio access network and that can perform wireless communication with a terminal. The base station may be in a plurality of forms, for example, a macro base station, a micro base station, a relay station, and an access point. For example, the base station may be a base station in a 5G network or a base station in a long term evolution (long term evolution, LTE) network. The base station in the 5G network may also be referred to as a transmission reception point (transmission reception point, TRP) or a gNB.

In embodiments of this application, an apparatus configured to implement a function of the network device may be the network device, or may be another apparatus configured to support the network device in implementing the function of the network device, for example, a chip deployed in the network device. In some embodiments, the chip includes a processor, configured to invoke a computer program from a memory and run the computer program, so that the network device on which the chip is installed implements a method performed by a network device according to any embodiment of this application.

The network device provided in embodiments of this application may include a memory and a processor. The memory is configured to store executable code/instructions. When executing the executable code/instructions, the processor implements a random access method that is performed by a network device according to any embodiment of this application.

An embodiment of this application further provides a computer-readable storage medium, configured to store executable code/instructions. When the executable code/instructions is/are executed by a processor of an electronic device, the electronic device is enabled to implement a random access method performed by a network device according to any embodiment of this application.

An embodiment of this application further provides a computer program product including executable code/instructions. When the computer program product runs on an electronic device, the electronic device implements a random access method performed by a network device according to any embodiment of this application.

The technical solutions provided in embodiments of this application may be applied to a plurality of types of wireless communication systems such as a machine to machine (machine to machine, M2M) communication system and a cellular communication system. The wireless communication system may use a system architecture that is the same as or similar to that of a new radio (new radio, NR) system in a 5G network.

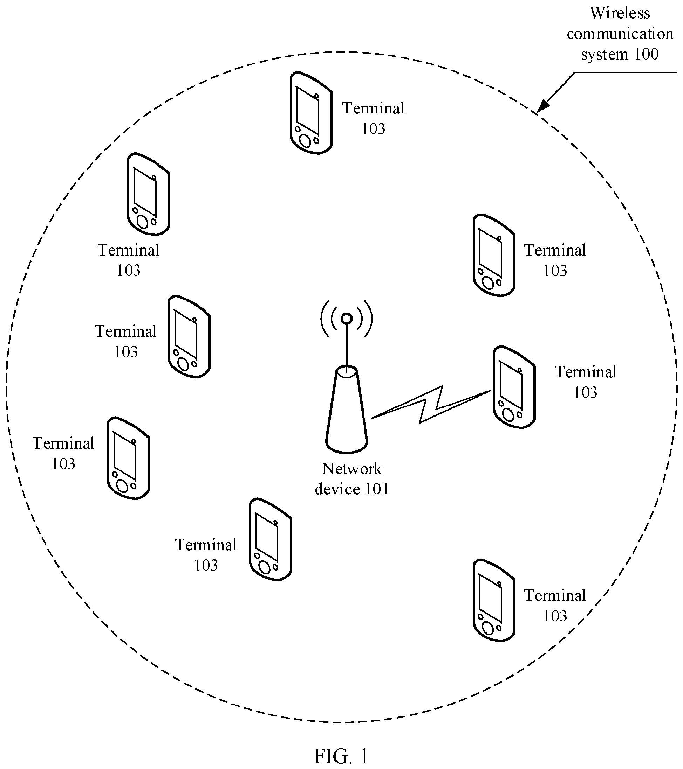

FIG. 1 is an example of a system architecture diagram of a wireless communication system. As shown in FIG. 1, the wireless communication system 100 may include a network device 101 and at least one terminal 103. Each terminal 103 may separately perform a random access procedure with the network device 101, to complete uplink time synchronization with the network device, and establish an RRC connection to the network device 101. After a terminal 103 establishes an RRC connection to the network device 101, service data can be transmitted between the terminal 103 and the network device 101.

It may be understood that before the terminal 103 initiates a random access procedure to the network device 101, the terminal 103 may further complete downlink time synchronization and frequency synchronization with the network device 101 based on a downlink synchronization signal from the network device 101. The downlink synchronization signal includes a primary synchronization signal (primary synchronization signal, PSS) and a secondary synchronization signal (secondary synchronization signal, SSS).

For example, the wireless communication system 100 uses an NR system architecture. The terminal 103 and the network device 101 may perform a random access procedure whose random access type is "4-step RACH", or may perform a random access procedure whose random access type is "2-step RACH". The NR R15 standard defines a random access procedure whose random access type is "4-step RACH", and the NR R16 standard defines a random access procedure whose random access type is "2-step RACH".

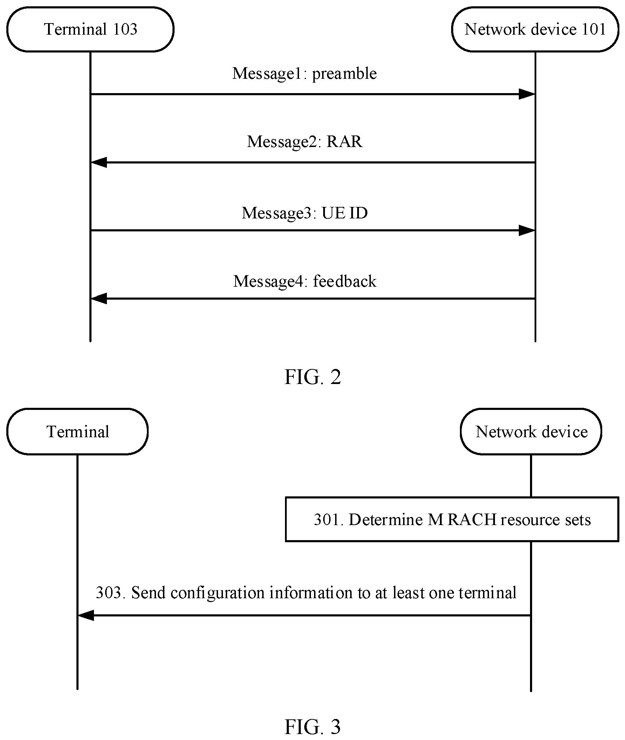

With reference to FIG. 2, that the terminal 103 and the network device 101 perform a random access procedure whose random access type is "4-step RACH" is further described below by using an example.

First, the terminal 103 sends a preamble to the network device on a physical random access channel (physical random access channel, PRACH). That is, the terminal 103 sends, to the network device 101, information 1 (message1) that includes the preamble. Before this, the terminal 103 may further obtain, by reading system broadcast information from the network device 101, configuration information sent by the network device 101 to the terminal 103. The configuration information may indicate one or more RACH resources. One RACH resource mainly includes a time domain resource, a frequency domain resource, an orthogonal code sequence resource, and the like that are used for the PRACH channel.

It should be noted that the RACH resource may also be referred to as a physical random access channel (physical random access channel, PARCH) resource.

Then, after sending message1, the terminal 103 starts a random access response window, and listens to, in the corresponding window, a random access response (random access response, RAR) sent by the network device 103. That is, the terminal 103 receives, from the network device 101, information 2 (message2) that includes the RAR.

Then, if the terminal 103 successfully detects the RAR sent by the network device 101 to the terminal 103, random access of the terminal 103 succeeds, and the terminal 103 may further send information 3 (message3) to the network device 101 based on an indication of the RAR. Message3 is mainly for sending an RRC connection request to the network device 101, and message3 may include a UE identifier (identifier, ID).

It should be noted that if the terminal 103 does not detect the RAR sent by the network device 101 to the terminal 103, random access of the terminal 103 fails, and the terminal 103 may re-initiate a random access procedure based on a backoff parameter indicated by the network device 101, until a corresponding maximum quantity of random access times is reached.

Further, after sending message3 to the network device 101, the terminal 103 listens to feedback (Feedback) of the network device 101 for message3. The network device sends information 4 (message4) to the terminal 103. Message4 may include a contention resolution identifier and an air interface parameter configuration for the terminal 103.

It should be noted that, if the terminal 103 successfully listens to message4 sent by the network device 101 to the terminal 103, random access of the terminal 103 succeeds, and the terminal 103 may send information 5 (message5) to the network device 101. Message5 is mainly for sending an RRC establishment complete command or other information to the network device 101. If the terminal does not obtain, through listening, message4 sent by the network device 101 to the terminal 103, random access of the terminal 103 fails, and the terminal 103 may re-initiate a random access procedure based on a backoff parameter indicated by the network device 101, until a corresponding maximum quantity of random access times is reached.

For a random access procedure whose random access type is "2-step RACH" defined in the NR R16 standard, four steps included in the random access procedure whose random access type is "4-step RACH" are actually combined into two steps. More specifically, in the random access procedure whose random access type is "2-step RACH", the terminal 103 may simultaneously send message1 and message3 to the network device, and the simultaneously sent message 1 and message3 are also referred to as information A (message A). Correspondingly, the terminal 103 may receive, from the network device 101, feedback on messageA after receiving messageA, that is, send information B (message B) to the terminal 103.

A bandwidth part (bandwidth part, BWP) is introduced into an NR system. The BWP indicates a frequency domain resource used by the terminal to perform data transmission. The network device configures an uplink BWP and a downlink BWP for the terminal using signaling, and the terminal can perform data transmission only within a BWP range configured by the base station. In a downlink initial access phase and an uplink initial access phase, an uplink BWP and a downlink BWP in which the terminal works are respectively referred to as a UL initial BWP and a DL initial BWP. For the random access procedure whose random access type is "4-step RACH", message2 and message4 are transmitted on the DL initial BWP, and message1 and message3 are transmitted on the UL initial BWP. For the random access procedure whose random access type is "2-step RACH", messageA is transmitted on the UL initial BWP, and messageB is transmitted on the DL initial BWP.

It may be understood that the terminal may alternatively perform the random access procedure with the network device in another manner, that is, a random access type of the random access procedure performed between the terminal and the network device may further include another random access type different from "4-step RACH" and "2-step RACH".

For example, the terminal and the network device may perform a random access procedure of another random access type. The random access procedure of the another random access type is similar to a random access procedure whose random access type is "4-step RACH". For ease of description, the another random access type is referred to as "4-step RACH&EDT (Early Data Transmission)" in embodiments of this application. A difference between a random access procedure whose random access type is "4-step RACH&EDT" and a random access procedure whose random access type is "4-step RACH" mainly lies in that message3 sent by the terminal to the network device includes service data sent by the terminal to the network device.

For example, the terminal and the network device may perform a random access procedure of another random access type. The random access procedure of the another random access type is similar to a random access procedure whose random access type is "2-step RACH". For ease of description, the another random access type is referred to as "2-step RACH&EDT" in embodiments of this application. A difference between a random access procedure whose random access type is "2-step RACH&EDT" and a random access procedure whose random access type is "2-step RACH" mainly lies in that messageA sent by the terminal to the network device includes service data sent by the terminal to the network device.

In embodiments of this application, the two types of random access procedures, namely, "4-step RACH&EDT" and "2-step RACH&EDT", are mainly applied to a terminal in an RRC inactive (RRC inactive) state. In this way, the terminal in the RRC inactive state can transmit service data before completing the random access procedure to enter an RRC connected (RRC connected) state. This can save air interface resources of the network device, reduce power consumption of the terminal, and reduce a data transmission delay. It may be understood that the two types of random access procedures "4-step RACH&EDT" and "2-step RACH&EDT" may also be applied to a terminal in an RRC idle (RRC idle) state.

In conclusion, a random access type that is supported by the terminal for performing a random access procedure with the network device is a capability of the terminal. Different terminals may support different random access types. A same terminal may support one or more of the foregoing random access types. Y1 random access types may be determined based on a random access type supported by a terminal, where Y1 is a positive integer. If a configuration of the network device supports random access procedures of Y1 random access types performed by the network device, a random access type of a random access procedure performed by a terminal with the network device may be one or more of the Y1 random access types.

In embodiments of this application, different terminals may have different bandwidth capabilities, and Y2 bandwidth types may be determined based on a bandwidth capability of a terminal, where Y2 is a positive integer. The bandwidth capability of the terminal is a maximum bandwidth that can be used, when data transmission is performed between the terminal and the network device, by a carrier for carrying data sent by the terminal to the network device/for carrying data from the network device. For example, if a terminal may send data to a network device on a carrier using a frequency resource with a maximum bandwidth of 100 MHz, an uplink bandwidth capability of the terminal is 100 MHz; if the terminal may receive data from the network device on a carrier using a frequency resource with a maximum bandwidth of 100 MHz, a downlink bandwidth capability of the terminal is 100 MHz. For another example, if a terminal may send data to a network device on a carrier using a frequency resource with a maximum bandwidth of 20 MHz, an uplink bandwidth capability of the terminal is 20 MHz; if the terminal may receive data from the network device on a carrier using a frequency resource with a maximum bandwidth of 20 MHz, a downlink bandwidth capability of the terminal is 20 MHz. Generally, an uplink bandwidth capability and a downlink bandwidth capability of a terminal are the same. Therefore, the uplink bandwidth capability or the downlink bandwidth capability of the terminal may be used as a bandwidth capability of the terminal.

For example, a bandwidth capability of a single terminal may be 5 MHz, 10 MHz, 20 MHz, or 100 MHz. A bandwidth type of a terminal with a bandwidth capability of 5 MHz or 10 MHz may be usually represented as "NR_REDCAP type1", that is, a terminal with a bandwidth capability of 5 MHz or 10 MHz may be usually referred to as an NR_REDCAP type1 terminal. In some other embodiments, a terminal with bandwidth capability of 5 MHz and a terminal with bandwidth capability of 10 MHz may also be defined as two different types of terminals. A bandwidth type of a terminal with a bandwidth capability of 20 MHz may be usually represented as NR_REDCAP type2, that is, a terminal with a bandwidth capability of 20 MHz may be usually referred to as an NR _REDCAP type2 terminal. A bandwidth type of a terminal with a bandwidth capability of 100 MHz may be usually represented as NR _legacy, that is, a terminal with a bandwidth capability of 100 MHz may be usually referred to as an NR_legacy terminal. In other words, three bandwidth types NR_REDCAP type1, NR_REDCAP type2, and NR_legacy may be determined.

In embodiments of this application, a terminal type of a terminal is related to a bandwidth type of the terminal and a random access type supported by the terminal, and N terminal types may be determined based on the bandwidth type and/or the random access type of the terminal, where N is a positive integer. More specifically, the N terminal types may be determined based on the Y2 bandwidth types and/or the Y1 random access types. It should be noted that, for a same terminal, because the terminal may support one or more random access types, the same terminal may correspond to one or more of the foregoing N terminal types. For example, a terminal type T9 may be determined based on the bandwidth type "NR_legacy" and the random access type 4-step RACH, and a terminal type T10 may be determined based on the bandwidth type "NR_legacy" and the random access type2-step RACH. A bandwidth type corresponding to the terminal type T9 is the same as a bandwidth type corresponding to the terminal type T10, but a random access type corresponding to the terminal type T9 is different from a random access type corresponding to the terminal type T10.

In a possible implementation, any one of the N terminal types may be determined based on one of the Y2 bandwidth types. That is, the total quantity Y2 of bandwidth types is the same as the Y2 bandwidth types are in a one-to-one correspondence total quantity N of terminal types, and the Y2 bandwidth types are in a one-to-one correspondence with the N terminal types.

For example, refer to the following Table 1. Three terminal types "P1", "P2", and "P3" may be determined based on three bandwidth types "NR_REDCAP type1", "NR_REDCAP type2", and "NR_legacy".

**Table 1**

| Bandwidth type | Terminal type |
|---|---|
| NR_legacy | P1 |
| NR_REDCAP type 1 | P2 |
| NR_REDCAP type2 | P3 |

In Table 1, a terminal type determined based on a bandwidth type "NR_legacy" is "P1", a terminal type determined based on a bandwidth type "NR_REDCAP type1" is "P2", and a terminal type determined based on a bandwidth type "NR_REDCAP type2" is "P3".

In a possible implementation, any one of the N terminal types may be determined based on one of the Y2 bandwidth types and one of the Y1 random access types. To be specific, the total quantity N of terminal types is a product of the total quantity Y2 of bandwidth types and the total quantity Y1 of random access types.

For example, refer to the following Table 2. A total of 12 terminal types T1 to T12 may be determined based on three bandwidth types "NR_REDCAP type1", "NR_REDCAP type2", and "NR_legacy" and four random access types "4-step RACH", "4-step RACH&EDT", "2-step RACH", and "2-step RACH&EDT".

**Table 2**

| | 4-step RACH | 2-step RACH | 4-step RACH&EDT | 2-step RACH&EDT |
|---|---|---|---|---|
| NR_REDCAP type1 | T1 | T2 | T3 | T4 |
| NR_REDCAP type2 | T5 | T6 | T7 | T8 |
| NR_legacy | T9 | T10 | T11 | T12 |

In Table 2, a terminal type determined based on "NR_REDCAP type1" and "4-step RACH" is "T1", a terminal type determined based on "NR_REDCAP type1" and "2-step RACH" is "T2", a terminal type determined based on "NR_REDCAP type1" and "4-step RACH&EDT" is "T3", and a terminal type determined based on "NR_REDCAP type1" and "2-step RACH&EDT" is "T4"; a terminal type determined based on "NR_REDCAP type2" and "4-step RACH" is "T5", a terminal type determined based on "NR_REDCAP type2" and "2-step RACH" is "T6", a terminal type determined based on "NR_REDCAP type2" and "4-step RACH&EDT" is "T7", and a terminal type determined based on "NR_REDCAP type2" and "2-step RACH&EDT" is "T8"; a terminal type determined based on "NR_legacy" and "4-step RACH" is "T9", a terminal type determined based on "NR_legacy" and "2-step RACH" is "T10", a terminal type determined based on "NR_legacy" and "4-step RACH&EDT" is "T11", and a terminal type determined based on "NR_legacy" and "2-step RACH&EDT" is "T12".

It may be understood that a terminal type may be expressed by using a combination of a bandwidth type and a random access type. For example, the terminal type "T12" in Table 2 may include the bandwidth type "NR_legacy" and the random access type "2-step RACH&EDT" that are for determining "T12".

The following describes a specific process of communication between the network device and the terminal by using an example.

According to the technical solutions provided in embodiments of this application, the N terminal types supported by the network device may be flexibly configured based on at least one bandwidth type and/or at least one random access type, and M RACH resource sets are configured for the N terminal types, where M and N are positive integers. Terminals of different bandwidth types may send random access requests to the network device based on a same RACH resource set or different RACH resource sets, to initiate random access procedures. This helps terminals of various bandwidth types connect to the network device more efficiently.

FIG. 3 is a schematic flowchart of a random access method according to an embodiment of this application. A configuration instruction may be sent to a network device by a corresponding communication apparatus, and/or a corresponding configuration instruction may be input to the network device by an input device, to trigger the network device to perform at least the following step 301 and step 303.

In step 301, the network device determines M RACH resource sets.

The M RACH resource sets correspond to N terminal types, where both M and N are positive integers.

Any one of the M RACH resource sets may include a resource or a combination of a time domain resource, a frequency domain resource, or an orthogonal code sequence resource of a RACH. RACH resources included in any two different RACH resource sets are different in one or more of a frequency domain resource, a time domain resource, and an orthogonal code sequence resource.

The N terminal types are determined based on bandwidth types and random access types of terminals. More specifically, any one of the N terminal types may be determined based on one of Y2 bandwidth types, or may be determined based on one of the Y2 bandwidth types and one of Y1 random access types, where Y1 and Y2 are positive integers.

In step 303, the network device sends RACH configuration information to at least one terminal.

The RACH configuration information indicates the M RACH resource sets, the M RACH resource sets are used by the at least one terminal to send a random access request to the network device, and a bandwidth type of any one of the at least one terminal belongs to the bandwidth types for determining the N terminal types. More specifically, a bandwidth type of any one of the at least one terminal is one of the Y2 bandwidth types.

In a possible implementation, the RACH configuration information further indicates one of X RACH configurations, where X is a positive integer, and the X RACH configurations include at least two of the following RACH configurations:
a first RACH configuration, where the first RACH configuration is that the M RACH resource sets correspond to the N terminal types, M is less than N, and M is equal to 1;
a second RACH configuration, where the second RACH configuration is that the M RACH resource sets correspond to the N terminal types, M is equal to N, and M is greater than 1;
a third RACH configuration, where the third RACH configuration is that the M RACH resource sets correspond to the N terminal types, M is less than N, and M is greater than 1; or
a fourth RACH configuration, where the fourth RACH configuration is that the M RACH resource sets correspond to the N terminal types, M is equal to N, and M is equal to 1.

In a possible implementation, for one of the M RACH resource sets, the network device may determine at least one terminal type corresponding to the RACH resource set, determine at least one terminal that performs a random access procedure based on the at least one terminal type, and then send configuration information to the at least one terminal. The network device allocates RACH resources based on bandwidth types of terminals and random access types, so that resource configuration in a random access procedure is more flexible, and resource utilization is improved.

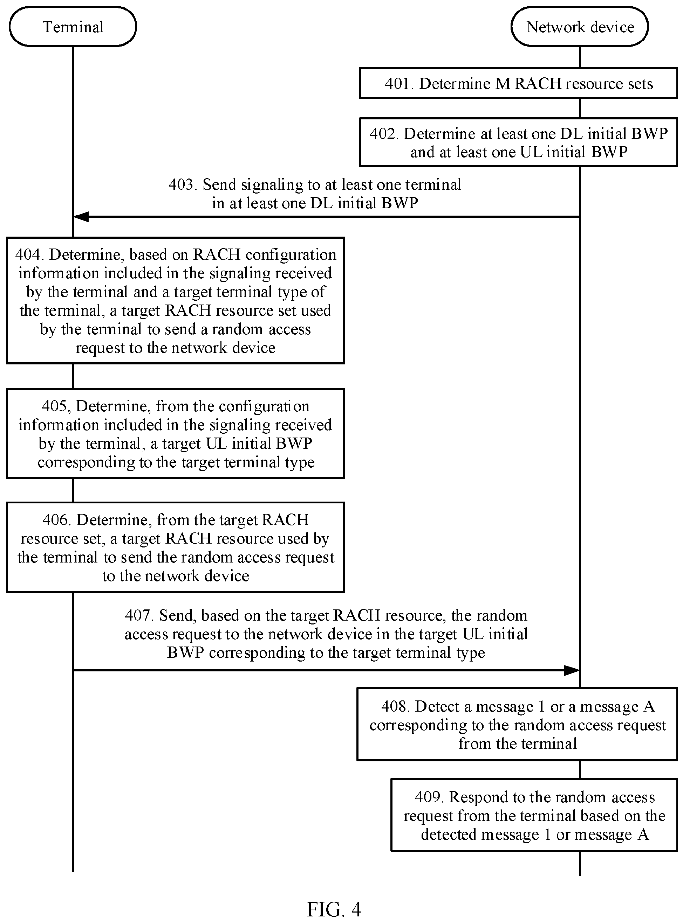

FIG. 4 is a schematic flowchart of another random access method according to an embodiment of this application.

In step 401, a network device determines M RACH resource sets.

The M RACH resource sets correspond to N terminal types, where both M and N are positive integers. More specifically, one of the M RACH resource sets corresponds to one or more of the N terminal types.

Herein, the network device may flexibly configure a correspondence between the M RACH resource sets and the N terminal types.

The following mainly describes the random access method in this embodiment of this application by using an example in which the network device may be connected to terminals of three bandwidth types: "NR_REDCAP type1", "NR_REDCAP type2", and "NR_legacy", and the network device supports random access procedures of four random access types: "4-step RACH", "4-step RACH&EDT", "2-step RACH", and "2-step RACH&EDT".

In a possible implementation, M is equal to N, and M is greater than 1. In other words, the M RACH resource sets are in a one-to-one correspondence with the N terminal types, and the network device may configure different RACH resource sets for at least different terminal types. In this case, terminals of different bandwidth types may initiate random access procedures using different RACH resource sets, and terminals of a same bandwidth type may use different RACH resources for performing random access procedures of different random access types with the network device. For any two terminals, the any two terminals, irrespective of the bandwidth types of the two terminals, may separately perform random access procedures of a same random access type or different random access types with the network device without affecting each other. This helps terminals of a plurality of bandwidth types connect to the network device more efficiently.

For example, the network device may determine 12 RACH resource sets listed in the following Table 3, and the 12 RACH resource sets correspond to 12 terminal types.

**Table 3**

| | 4-step RACH | 2-step RACH | 4-step RACH&EDT | 2-step RACH&EDT |
|---|---|---|---|---|
| NR_REDCAP type1 | T1, RACH-R1 | T2, RACH-R2 | T3, RACH-R3 | T4, RACH-R4 |
| NR_REDCAP type2 | T5, RACH-R5 | T6, RACH-R6 | T7, RACH-R7 | T8, RACH-R8 |
| NR_legacy | T9, RACH-R9 | T10, RACH-R10 | T11, RACH-R11 | T12, RACH-R12 |

As listed in Table 3, a RACH resource set corresponding to a terminal type "T1" is "RACH-R1", a RACH resource set corresponding to a terminal type "T2" is "RACH-R2", a RACH resource set corresponding to a terminal type "T3" is "RACH-R3", a RACH resource set corresponding to a terminal type "T4" is "RACH-R4", a RACH resource set corresponding to a terminal type "T5" is "RACH-R5", a RACH resource set corresponding to a terminal type "T6" is "RACH-R6", a RACH resource set corresponding to a terminal type "T7" is "RACH-R7", a RACH resource set corresponding to a terminal type "T8" is "RACH-R8", a RACH resource set corresponding to a terminal type "T9" is "RACH-R9", a RACH resource set corresponding to a terminal type "T10" is "RACH-R10", a RACH resource set corresponding to a terminal type "T11" is "RACH-R11", and a RACH resource set corresponding to a terminal type "T12" is "RACH-R12".

In a possible implementation, M is less than N, and M is greater than 1. In this case, terminals of different bandwidth types may use a same RACH resource set for performing random access procedures of a same random access type/different random access types with the network device; terminals of different bandwidth types may use different RACH resource sets for performing random access procedures of a same random access type/different random access types with the network device; or terminals of one bandwidth type may use a same RACH resource set for performing random access procedures of different random access types with the network device. This can improve RACH resource utilization.

For example, the network device may determine seven RACH resource sets listed in the following Table 4, and the seven RACH resource sets correspond to 12 terminal types.

**Table 4**

| | 4-step RACH | 2-step RACH | 4-step RACH&EDT | 2-step RACH&EDT |
|---|---|---|---|---|
| NR_REDCAP type1 | T1, RACH-R1 | T2, RACH-R2 | T3, RACH-R3 | T4, RACH-R4 |
| NR_REDCAP type2 | T5, RACH-R1 | T6, RACH-R2 | T7, RACH-R3 | T8, RACH-R4 |
| NR_legacy | T9, RACH-R5 | T10, RACH-R6 | T11, RACH-R7 | T12, RACH-R4 |

As listed in Table 4, terminal types corresponding to the RACH resource set "RACH-R1" include "T1" and "T5", terminal types corresponding to the RACH resource set "RACH-R2" include "T2" and "T6", terminal types corresponding to the RACH resource set "RACH-R3" include "T3" and "T7", terminal types corresponding to the RACH resource set "RACH-R4" include "T4", "T8", and "T12", a terminal type corresponding to the RACH resource set "RACH-R5" is "T9", a terminal type corresponding to the RACH resource set "RACH-R6" is "T10", and a terminal type corresponding to the RACH resource set "RACH-R7" is "T11".

As listed in Table 4, for terminals whose bandwidth types are NR_REDCAP type1 and NR_REDCAP type2, the network device may configure a group of same RACH resource sets for a same random access type, so that when the terminals whose bandwidth types are NR_REDCAP type1 and NR_REDCAP type2 separately perform random access procedures of the same random access type with the network device, RACH resources included in the same RACH resource sets are used.

For example, the network device may determine eight RACH resource sets listed in the following Table 5, and the eight RACH resource sets correspond to 12 terminal types.

**Table 5**

| | 4-step RACH | 2-step RACH | 4-step RACH&EDT | 2-step RACH&EDT |
|---|---|---|---|---|
| NR_REDCAP type1 | T1, RACH-R1 | T2, RACH-R2 | T3, RACH-R3 | T4, RACH-R8 |
| NR_REDCAP type2 | T5, RACH-R5 | T6, RACH-R6 | T7, RACH-R7 | T8, RACH-R4 |
| NR_legacy | T9, RACH-R5 | T10, RACH-R6 | T11, RACH-R7 | T12, RACH-R4 |

As listed in Table 5, a terminal type corresponding to the RACH resource set "RACH-R1" is "T1", a terminal type corresponding to the RACH resource set "RACH-R2" is "T2", a terminal type corresponding to the RACH resource set "RACH-R3" is "T3", terminal types corresponding to the RACH resource set "RACH-R4" include "T8" and "T12", terminal types corresponding to the RACH resource set "RACH-R5" include "T5" and "T9", terminal types corresponding to the RACH resource set "RACH-R6" include "T6" and "T10", terminal types corresponding to the RACH resource set "RACH-R7" include "T7" and "T11", and a terminal type corresponding to the RACH resource set "RACH-R8" is "T4".

As listed in Table 5, for terminals whose bandwidth types are NR_REDCAP type2 and NR_legacy, the network device may configure a group of same RACH resource sets for a same random access type, so that when the terminals whose bandwidth types are NR_REDCAP type2 and NR _legacy separately perform random access procedures of the same random access type with the network device, RACH resources in the same RACH resource sets are used.

It may be understood that for the two random access types "2-step RACH" and "2-step RACH&EDT", volumes of data carried in messageA on a PUSCH are different. Correspondingly, different PUSCH resource sets are usually used in random access procedures of the two random access types "2-step RACH" and "2-step RACH&EDT".

In a possible implementation, for terminals of a same bandwidth type, the network device may configure two different RACH resource sets for two random access types "2-step RACH" and "2-step RACH&EDT", and the different RACH resource sets are associated with different PUSCH resource sets. In this case, when a terminal sends messageA to the network device, the network device may first determine a target RACH resource set to which a RACH resource used for messageA belongs, and then quickly determine a PUSCH resource set associated with the target RACH resource set.

For example, the network device may determine six RACH resource sets listed in the following Table 6, and the six RACH resource sets correspond to 12 terminal types.

**Table 6**

| | 4-step RACH | 2-step RACH | 4-step RACH&EDT | 2-step RACH&EDT |
|---|---|---|---|---|
| NR_REDCAP type1 | T1, RACH-R1 | T2, RACH-R2 | T3, RACH-R3 | T4, RACH-R4 |
| NR_REDCAP type2 | T5, RACH-R5 | T6, RACH-R2 | T7, RACH-R6 | T8, RACH-R4 |
| NR_legacy | T9, RACH-R5 | T10, RACH-R2 | T11, RACH-R6 | T12, RACH-R4 |

As listed in Table 6, all terminals whose bandwidth types are NR_REDCAP type1, NR_REDCAP type2, and NR _legacy may perform a random access procedure of the random access type "2-step RACH" with the network device using a RACH resource included in RACH-R2. All terminals whose bandwidth types are NR_REDCAP type1, NR_REDCAP type2, and NR_legacy may perform a random access procedure of the random access type "2-step RACH" with the network device using a RACH resource included in RACH-R4.

In a possible implementation, for terminals of a same bandwidth type, the network device may configure a same RACH resource set for two random access types "2-step RACH" and "2-step RACH&EDT", and the RACH resource set is associated with two different PUSCH resource sets. In this case, when receiving messageA from a terminal, after determining a target RACH resource set to which a RACH resource used for messageA belongs, the network device may perform blind detection on two PUSCH resource sets corresponding to the target RACH resource set. This helps reduce RACH resource overheads and reduce complexity of network statistics collection on RACH resources.

For example, the network device may determine five RACH resource sets listed in the following Table 7, and the five RACH resource sets correspond to 12 terminal types.

**Table 7**

| | 4-step RACH | 2-step RACH | 4-step RACH&EDT | 2-step RACH&EDT |
|---|---|---|---|---|
| NR_REDCAP type1 | T1, RACH-R1 | T2, RACH-R2 | T3, RACH-R3 | T4, RACH-R2 |
| NR_REDCAP type2 | T5, RACH-R4 | T6, RACH-R2 | T7, RACH-R5 | T8, RACH-R2 |
| NR_legacy | T9, RACH-R4 | T10, RACH-R2 | T11, RACH-R5 | T12, RACH-R2 |

As listed in Table 7, all terminals whose bandwidth types are NR_REDCAP type1, NR_REDCAP type2, and NR_legacy may perform random access procedures of the random access types "2-step RACH" and "2-step RACH&EDT" with the network device using a RACH resource included in RACH-R2.

In a possible implementation, M is equal to 1, and M is less than N. In other words, the network device may configure completely the same RACH resource sets for the N terminal types. In this case, signaling overheads of the network device can be reduced, and complexity of network statistics collection performed by the network device on the RACH resource can be reduced.

For example, the network device may determine one RACH resource set listed in the following Table 8, and the RACH resource set corresponds to 12 terminal types.

**Table 8**

| | 4-step RACH | 2-step RACH | 4-step RACH&EDT | 2-step RACH&EDT |
|---|---|---|---|---|
| NR_REDCAP type1 | T1, RACH-R1 | T2, RACH-R1 | T3, RACH-R1 | T4, RACH-R1 |
| NR_REDCAP type2 | T5, RACH-R1 | T6, RACH-R1 | T7, RACH-R1 | T8, RACH-R1 |
| NR_legacy | T9, RACH-R1 | T10, RACH-R1 | T11, RACH-R1 | T12, RACH-R1 |

As listed in Table 8, terminal types T1 to T12 all correspond to the RACH resource set "RACH-R1", and terminals of NR_REDCAP type1, NR_REDCAP type2, and NR_legacy may all use a RACH resource included in RACH-R1 to perform random access procedures of the random access types "2-step RACH", "2-step RACH&EDT", 4-step RACH, and 4-step RACH&EDT with the network device.

In a possible implementation, M is equal to N, and M is equal to 1. In other words, the network device supports a terminal of only one bandwidth type to perform a random access procedure of only one random access type with the network device.

Then, in step 402, the network device determines at least one DL initial BWP and at least one UL initial BWP.

One DL initial BWP corresponds to one or more of the N terminal types, and one UL initial BWP corresponds to one or more of the N terminal types. Because one RACH resource set corresponds to one or more terminal types, one DL initial BWP corresponds to one or more RACH resource sets.

Herein, a quantity of DL initial BWPs and a bandwidth of each DL initial BWP may be flexibly configured, and a quantity of UL initial BWPs and a bandwidth of each UL initial BWP may be flexibly configured. In addition, a correspondence between the at least one DL initial BWP and the N terminal types and a correspondence between the at least one UL initial BWP and the N terminal types may be flexibly configured.

In a possible implementation, the quantity of UL initial BWPs, the bandwidth of each UL initial BWP may be determined, the quantity of DL initial BWPs, and the bandwidth of each DL initial BWP may be determined based on Y2 bandwidth types for determining the N terminal types.

For example, two DL initial BWPs may be configured: a first DL initial BWP and a second DL initial BWP. A bandwidth of the first DL initial BWP may be a minimum bandwidth capability 5 MHz corresponding to terminals of three bandwidth types: NR_REDCAP type1, NR_REDCAP type2, and NR_legacy. A bandwidth of the second DL initial BWP may be a bandwidth other than 5 MHz, for example, 20 MHz.

For example, three UL initial BWPs may be configured: a first UL initial BWP, a second UL initial BWP, and a third UL initial BWP. A bandwidth of the first UL initial BWP may be 5 MHz, a bandwidth of the second UL initial BWP may be 20 MHz, and a bandwidth of the third UL initial BWP is 100 MHz.

For example, the network device may further determine two DL initial BWPs listed in Table 9, and the two DL initial BWPs correspond to 12 terminal types.

**Table 9**

| | 4-step RACH | 2-step RACH | 4-step RACH&EDT | 2-step RACH&EDT |
|---|---|---|---|---|
| NR_REDCAP type1 | T1, first DL initial BWP | T2, first DL initial BWP | T3, first DL initial BWP | T4, first DL initial BWP |
| NR_REDCAP type2 | T5, second DL initial BWP | T6, second DL initial BWP | T7, second DL initial BWP | T8, second DL initial BWP |
| NR_legacy | T9, second DL initial BWP | T10, second DL initial BWP | T11, second DL initial BWP | T12, second DL initial BWP |

As listed in Table 9, the four terminal types "T1", "T2", "T3", and "T4" all correspond to the first DL initial BWP whose bandwidth is 5 MHz, and the eight terminal types "T5", "T6", "T7", "T8", "T9", "T10", "T11", and "T12" all correspond to the second DL initial BWP whose bandwidth is 20 MHz.

For example, the network device may further determine three UL initial BWPs listed in Table 10, and the three UL initial BWPs correspond to 12 terminal types.

**Table 10**

| | 4-step RACH | 2-step RACH | 4-step RACH&EDT | 2-step RACH&EDT |
|---|---|---|---|---|
| NR_REDCAP type1 | T1, first UL initial BWP | T2, first UL initial BWP | T3, first UL initial BWP | T4, first UL initial BWP |
| NR_REDCAP type1 | T5, second UL initial BWP | T6, second UL initial BWP | T7, second UL initial BWP | T8, second UL initial BWP |
| NR_legacy | T9, third UL | T10, third UL | T11, third UL initial BWP | T12, third UL initial |
| | initial BWP | initial BWP | | BWP |

As listed in Table 10, the four terminal types "T1", "T2", "T3", and "T4" all correspond to the first UL initial BWP whose bandwidth is 5 MHz, the eight terminal types "T5", "T6", "T7", and "T8" all correspond to the second UL initial BWP whose bandwidth is 20 MHz, and the four terminal types "T9", "T10", "T11", and "T12" all correspond to the second UL initial BWP whose bandwidth is 100 MHz.

It may be understood that the quantities of DL initial BWPs and UL initial BWPs and the bandwidths of each DL initial BWP and each UL initial BWP may alternatively be configured in another form, and the correspondence between the at least one DL initial BWP and the N terminal types and the correspondence between the at least one UL initial BWP and the N terminal types may alternatively be configured in another form.

For example, only one DL initial BWP and two UL initial BWPs may be configured. In a possible implementation, a bandwidth of the DL initial BWP is 5 MHz, and the DL initial BWP corresponds to the N terminal types. In addition, a bandwidth of one UL initial BWP is 5 MHz, and a bandwidth of the other UL initial BWP is 20 MHz. Correspondingly, 12 terminal types T1 to T12 all correspond to the DL initial BWP whose bandwidth is 5 MHz, four terminal types "T1", "T2", "T3", and "T4" all correspond to the UL initial BWP whose bandwidth is 5 MHz, and eight terminal types "T5", "T6", "T7", "T8", "T9", "T10", "T11", and "T12" all correspond to the UL initial BWP whose bandwidth is 20 MHz.

For example, there are only two bandwidth types: NR_legacy and NR_REDCAP type2. Correspondingly, there are eight terminal types: "T1", "T2", "T3", "T4", "T9", "T10", "T11", and "T12". In a possible implementation, similarly, the network device configures only one DL initial BWP and configures two UL initial BWPs. A maximum bandwidth of the DL initial BWP is configured to be 20 MHz. In addition, a maximum bandwidth of the first UL initial BWP in the two UL initial BWPs can be configured to be 20 MHz, and a maximum bandwidth of the second UL initial BWP in the two UL initial BWPs can be configured to be greater than 20 MHz. Correspondingly, "T1", "T2", "T3", "T4", "T9", "T10", "T11", and "T12" all correspond to the DL initial BWP, four terminal types such as "T9", "T10", "T11", and "T12" all correspond to the first UL initial BWP, and four terminal types such as "T1", "T2", "T3", and "T4" all correspond to the second UL initial BWP.

For example, the network device may alternatively configure only one DL initial BWP and one UL initial BWP, and bandwidths of both the DL initial BWP and the UL initial BWP are 5 MHz. Both the DL initial BWP and the UL initial BWP correspond to the N terminal types.

Then, in step 403, signaling is sent to the at least one terminal in the at least one DL initial BWP.

The signaling includes but is not limited to any one or more of MACCE signaling, DCI signaling, SIB1 signaling, and RRC signaling.

In a possible implementation, the network device may first determine, for each DL initial BWP determined by the network device, various current terminal types corresponding to the DL initial BWP; then determine current RACH resource sets each corresponding to the various current terminal types; and then send signaling in the DL initial BWP, where the signaling includes configuration information, and the configuration information includes each current RACH resource set, each current terminal type corresponding to each current RACH resource set, and a UL initial BWP corresponding to each current terminal type.

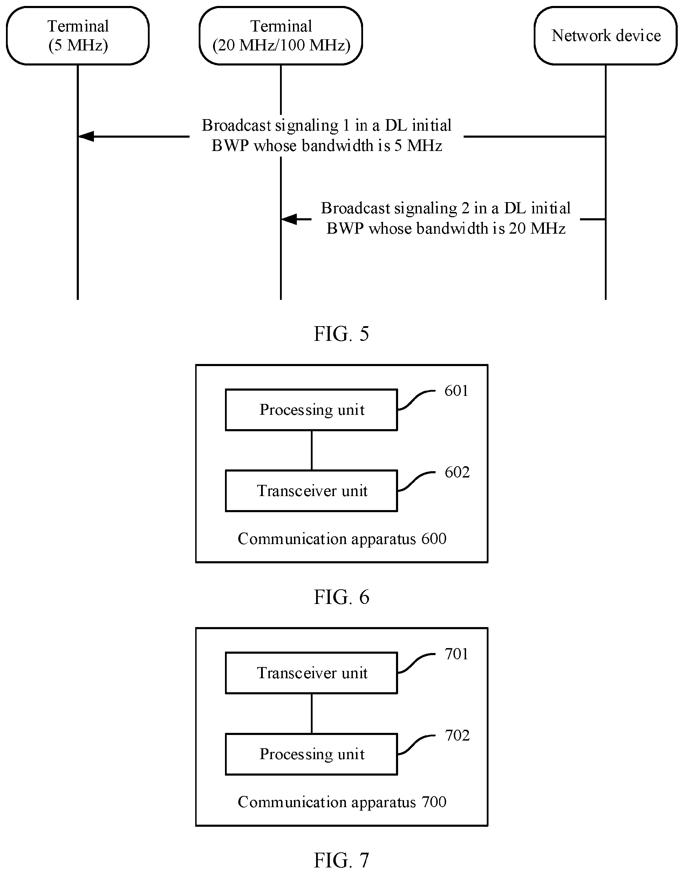

Still using an example in which the M RACH resource sets, the at least one UL initial BWP, and the at least one DL initial BWP that are determined by the network device meet the configurations listed in Table 4, Table 9, and Table 10, the following further describes, with reference to FIG. 5, a process in which the network device sends the configuration information to the at least one terminal. As shown in FIG. 5, the network device may broadcast, in the DL initial BWP whose bandwidth is 5 MHz, signaling 1 to the at least one terminal whose bandwidth type is NR_REDCAP type1; and broadcast, in the DL initial BWP whose bandwidth is 20 MHz, signaling 2 to the at least one terminal whose bandwidth type is NR_REDCAP type2 and/or NR _legacy.

Configuration information in the signaling 1 may indicate: a current RACH resource set RACH-R1, a current terminal type T1 corresponding to RACH-R1, and a first UL initial BWP corresponding to T1; a current RACH resource set RACH-R2, a current terminal type T2 corresponding to RACH-R2, and a first UL initial BWP corresponding to T2; a current RACH resource set RACH-R3, a current terminal type T3 corresponding to RACH-R3, and a first UL initial BWP corresponding to T3; and a current RACH resource set RACH-R4, a current terminal type T4 corresponding to RACH-R4, and a first UL initial BWP corresponding to T4.

For example, the signaling 1 may include configuration information listed in the following Table 11.

**Table 11**

| RACH resource set | Terminal type | UL initial BWP |
|---|---|---|
| RACH-R1 | T1 | First UL initial BWP |
| RACH-R2 | T2 | |
| RACH-R3 | T3 | |
| RACH-R4 | T4 | |

Configuration information in the signaling 2 may indicate: a current RACH resource set RACH-R1, a current terminal type T5 corresponding to RACH-R1, and a second UL initial BWP corresponding to T5; a current RACH resource set RACH-R2, a current terminal type T6 corresponding to RACH-R2, and a second UL initial BWP corresponding to T6; a current RACH resource set RACH-R3, a current terminal type T7 corresponding to RACH-R3, and a second UL initial BWP corresponding to T7; a current RACH resource set RACH-R4, current terminal types T8 and T12 corresponding to RACH-R4, a second UL initial BWP corresponding to T8, and a third UL initial BWP corresponding to T12; a current RACH resource set RACH-R5, a current terminal type T9 corresponding to RACH-R5, and a third UL initial BWP corresponding to T9; a current RACH resource set RACH-R6, a current terminal type T10 corresponding to RACH-R6, and a third UL initial BWP corresponding to T10; and a current RACH resource set RACH-R6, a current terminal type T11 corresponding to RACH-R6, and a third UL initial BWP corresponding to T11.

For example, the signaling 2 may include configuration information listed in the following Table 12.

**Table 12**

| RACH resource set | Terminal type | UL initial BWP |
|---|---|---|
| RACH-R1 | T5 | Second UL initial BWP |
| RACH-R2 | T6 | |
| RACH-R3 | T7 | |
| RACH-R4 | T8 | |
| RACH-R5 | T9 | Third UL initial BWP |
| RACH-R6 | T10 | |
| RACH-R7 | T11 | |
| RACH-R4 | T12 | |

Correspondingly, a terminal whose bandwidth type is NR_REDCAP type1 may receive the signaling 1 from the network device in the first DL initial BWP whose bandwidth is 5 MHz, and a terminal whose bandwidth type is NR_REDCAP type2 or NR_legacy may receive the signaling 2 from the network device in the second DL initial BWP whose bandwidth is 20 MHz.

It may be understood that the network device may configure some of the M RACH resource sets in one piece of signaling, or may configure some of the RACH resource sets in a plurality of pieces of signaling. In other words, for one RACH resource set, the network device may send, in one or more DL initial BWPs, configuration information including the RACH resource set to terminals of one or more bandwidth types.

For example, terminal types corresponding to RACH-R1 include T1 and T5, a DL initial BWP corresponding to T1 is a first DL initial BWP, and a DL initial BWP corresponding to T5 is a second DL initial BWP. The network device may configure RACH-R1 in the configuration information included in the signaling 1 and the signaling 2. Then, the network device may broadcast, in the first DL initial BWP whose bandwidth is 5 MHz, the signaling 1 to a terminal whose bandwidth type is NR_REDCAP type1, and broadcast, in the second DL initial BWP whose bandwidth is 20 MHz, the signaling 2 to terminals whose bandwidths are NR_REDCAP type2 and NR_legacy. In this way, the configuration information including RACH-R1 is sent, in the first DL initial BWP and the second DL initial BWP, to terminals whose bandwidth types are NR_REDCAP type1 and NR_REDCAP type2.

In some embodiments, the M RACH resource sets determined by the network device, the correspondences between the M RACH resource sets and the N terminal types, and the correspondence between the N terminal types and the at least one UL initial BWP may be configured in same signaling. Correspondingly, the network device may send the signaling to terminals of the Y2 bandwidth types in a same DL initial BWP or different DL initial BWPs.

In step 404, a terminal determines, based on RACH configuration information included in signaling received by the terminal and a target terminal type of the terminal, a target RACH resource set used by the terminal to send a random access request to the network device.

It may be understood that the terminal that performs step 404 is a terminal that has received the signaling from the network device and needs to perform a random access procedure with the network device to connect to the network device. As described above, a bandwidth type of the terminal may be NR_REDCAP type1, NR_REDCAP type2, or NR _legacy, and the terminal may perform random access procedures of a plurality of types such as "4-step RACH", "2-step RACH", "4-step RACH&EDT", and "2-step RACH&EDT" with the network device.

For example, the terminal may determine, based on the target terminal type of the terminal and from the configuration information included in the signaling received by the terminal, a RACH resource set corresponding to the target terminal type. The determined RACH resource set is the target RACH resource set used by the terminal to send the random access request to the network device.

In some embodiments, the terminal may select, through user configuration or in another manner, a random access type for performing a random access procedure between the terminal and the network device, and then determine the target terminal type of the terminal based on the selected random access type and the bandwidth type of the terminal.

In some embodiments, the configuration information received by the terminal may indicate a random access type of a random access procedure performed by the terminal and the network device. The terminal may determine, based on an indication of the configuration information, the bandwidth type of the terminal, and a supported random access type, the target RACH resource set for sending the random access request. For example, the bandwidth type of the terminal is NR_REDCAP type1, and the terminal may receive the signaling 1 from the network device. If the selected random access type is "4-step RACH", or the configuration information included in the signaling 1 indicates that a random access type of a random access procedure performed by the NR_REDCAP type1 terminal is "4-step RACH", the terminal may determine, based on the bandwidth type "NR_REDCAP type1" of the terminal and the random access type "4-step RACH", that a corresponding RACH resource set is "RACH-R1", that is, determine that the target RACH resource set used by the terminal to send the random access request to the network device is "RACH-R1".

It should be noted that the network device may not configure a RACH resource set for the target terminal type of the terminal. In other words, the terminal may fail to determine, from the configuration information included in the signaling from the network device, the RACH resource set corresponding to the target terminal type. In this case, the terminal may determine, from the configuration information, a RACH resource set configured by the network device for another terminal type, and determine, from the RACH resource set, a target RACH resource used by the terminal to send the random access request to the network device.

For example, for two terminal types "T9" and "T5" determined by one random access type "4-step RACH" and two bandwidth types "NR_legacy" and "NR_REDCAP type2", if the terminal fails to determine, from the configuration information included in the signaling from the network device, a RACH resource set corresponding to "T5", but the configuration information includes a RACH resource set corresponding to "T9", the terminal may determine the RACH resource set corresponding to "T9" as the target RACH resource used by the terminal to send the random access request to the network device.

In step 405, the terminal determines, from the configuration information included in the signaling received by the terminal, a target UL initial BWP corresponding to the target terminal type.

For example, the bandwidth type of the terminal is NR_REDCAP type1, and the signaling 1 from the network device may be received. The terminal may determine, from the configuration information included in the signaling 1, that a UL initial BWP corresponding to the target terminal type "T1" is the "first UL initial BWP".

In step 406, the terminal determines, from the target RACH resource set, a target RACH resource used by the terminal to send the random access request to the network device.

In step 407, the terminal sends, based on the target RACH resource, the random access request to the network device in the target UL initial BWP corresponding to the target terminal type.

The random access request is sent via message1 or messageA.

It may be understood that the random access request depends on a random access type supported by the terminal. For example, if the random access type supported by the terminal is "4-step RACH" or "4-step RACH&EDT", the random access request is sent via message 1; if the random access type supported by the terminal is "2-step RACH", the random access request is sent via messageA in which no service data is sent; if the random access type supported by the terminal is "2-step RACH&EDT", the random access request is sent via messageA in which service data is sent.

It should be noted that message1 and messageA are transmitted in a corresponding UL initial BWP. A maximum bandwidth of a DL initial BWP is limited to 20 MHz in an existing communication protocol, and a maximum bandwidth of a UL initial BWP may be greater than 20 MHz. However, a bandwidth capability of the terminal may be greater than 20 MHz, or may be less than 20 MHz, and the network device may configure at least two PUSCH resource sets for the message3/messageA.

To ensure that transmission bandwidths for scheduling message2, message3, message4, and messageB are less than the bandwidth capability of the terminal when the network device responds to messagel/messageA in a subsequent process, in a possible implementation, the random access request sent by the terminal to the network device may include the bandwidth type/terminal type/bandwidth capability of the terminal. In some embodiments, the random access request sent by the terminal to the network device may further include the random access type supported by the terminal.

When the random access request is sent via messageA, the bandwidth type/terminal type/bandwidth capability of the terminal may be reported to the network device as the data carried on the PUSCH.

In a specific example, in an initial access scenario, when the terminal sends messageA to the network device, the terminal may send RRC signaling (for example, RRCSetupRequest signaling) to the network device on the PUSCH. The RRC signaling includes a newly added information element (information element, IE), and the IE includes the bandwidth type/terminal type/bandwidth capability of the terminal. In another specific example, in an EDT scenario, when the terminal sends messageA to the network device, the terminal may send MACCE signaling to the network device on the PUSCH, where the MACCE signaling includes the bandwidth type/terminal type/bandwidth capability of the terminal.

In step 408, the network device detects message1 or messageA corresponding to the random access request from the terminal.

As described above, a single network device may support a random access procedure of "4-step RACH"/"4-step RACH&EDT", and support a random access procedure of "2-step RACH"/"2-step RACH&EDT".

For the two random access types "4-step RACH" and "4-step RACH&EDT", the terminal sends the random access request via message1, and the network device may detect a RACH resource for sending message1 to obtain message1, obtain the bandwidth type/bandwidth capability/terminal type of the terminal reported over a PRACH for sending message1, and complete detection on message1.

For the two random access types "2-step RACH" and "2-step RACH&EDT", the terminal sends the random access request via messageA, the network device needs to detect a PRACH of messageA and a PUSCH of messageA, to complete detection on messageA.

As described above, for the two random access types "2-step RACH" and "2-step RACH&EDT", volumes of data carried in messageA are different. If two different RACH resource sets are configured for the two random access types "2-step RACH" and "2-step RACH&EDT", and the different RACH resource sets are associated with different PUSCH resource sets, when the network device receives messageA from the terminal, the network device may first determine a target RACH resource set to which a target RACH resource for sending messageA belongs, and then quickly determine a PUSCH resource set associated with the target RACH resource set corresponding to messageA. If the network device configures a same RACH resource set for the two random access types "2-step RACH" and "2-step RACH &EDT", the RACH resource set is associated with two different PUSCH resource sets. When receiving messageA from the terminal, the network device may perform, after determining a target RACH resource set to which a RACH resource for sending message1 belongs, blind detection on two PUSCH resource sets corresponding to the target RACH resource set.

To indicate whether a random access type corresponding to the currently received random access request is "4-step RACH"/"4-step RACH&EDT" or "2-step RACH"/"2-step RACH&EDT", in a possible implementation, the network device may configure different RACH resource sets for "4-step RACH"/"4-step RACH&EDT" and "2-step RACH"/"2-step RACH&EDT". In this way, the network device determines, based on the PRACH detected by the network device, the random access type corresponding to the random access request received by the network device, and implements a subsequent corresponding random access procedure. This helps reduce complexity of detecting the PUSCH by the network device.

In a possible implementation, alternatively, the network device may configure a same PRACH resource for "4-step RACH"/"4-step RACH&EDT" and "2-step RACH"/"2-step RACH&EDT". This helps reduce PRACH resource overheads.

In a possible implementation, the terminal may further re-report the bandwidth capability/bandwidth type/terminal type of the terminal after the terminal completes a random process with the network device and enters an RRC connected state.

In step 409, the network device responds to the random access request from the network device based on message1 or messageA detected by the network device.

Herein, response is made to message1 or messageA from the terminal device.

In a possible implementation, the network device may obtain, based on the PUSCH resource set corresponding to the target RACH resource set, the bandwidth type/bandwidth capability/terminal type of the terminal carried on the PUSCH in messageA, or may obtain, based on the PRACH of messageA, the bandwidth type/bandwidth capability/terminal type reported by the terminal, and schedule messageB based on the bandwidth type/bandwidth capability/terminal type of the terminal, to respond to the random access request from the terminal.

In a possible implementation, the network device may obtain the bandwidth type/bandwidth capability/terminal type of the terminal that is reported over the PRACH for sending message 1, and schedule message2 and message3 based on the bandwidth type/bandwidth capability/terminal type of the terminal, to respond to the random access request from the terminal.

For random access responses (random access response, RAR) on a same random access occasion (RACH occasion, RO), the network device may schedule a PDSCH using downlink control information (downlink control information, DCI) with cyclic redundancy check (cyclic redundancy check, CRC) scrambled by a random access radio network temporary identifier (random access-radio network temporary identifier, RA-RNTI), where the PDSCH carries RARs to all or some random access requests for the RO. It should be understood that an RO refers to a time-frequency resource for sending and receiving RACH preambles. The network device may configure a plurality of mutually orthogonal preambles on a same RO, and a plurality of terminal devices may perform random access on a same RO using a same preamble or different preambles. If obtaining, through detection on an RO resource, the preambles sent by the terminal device, the network device sends a RAR, namely, message2 or messageB to the terminal device. One RO is associated with only one RA-RNTI, and different ROs are associated with different RA-RNTIs.

In a possible implementation, the network device configures a same RACH time domain resource and a same RACH frequency domain resource for terminals of different terminal types, but configures different frequency domain resources, that is, preambles, that is, different preambles on a same RO, where the terminal type includes a random access type and/or a terminal bandwidth type. The network device may perform group transmission on RARs of the different types of terminals, that is, transmit the RARs of the different types of terminals over a plurality of different PDSCHs. The different PDSCHs may be scheduled using DCI with CRC scrambled by different RA-RNTIs. The RA-RNTI may be calculated using a time resource, a frequency resource, a carrier resource, and a terminal type identifier of a RACH. A possible RA-RNTI calculation manner is as follows: RA-RNTI = 1 + s_id + 14 × t_id + 14 × 80 × f_id + 14 × 80 × 8 × ul_carrier_id + UE_type_id. s_id is an index of the first orthogonal frequency division multiplexing (orthogonal frequency division multiplexing, OFDM) symbol of the RO, t_id is an index of the first slot of the RO in a radio data frame, f_id is an index of the RO in frequency domain, ul_carrier_id is an index of an uplink carrier for sending a preamble, and UE_type_id is a terminal type identifier of a terminal sending the preamble. It should be noted that, in the solution of the present invention, the process of sending the PRACH or the preamble may be performed on different uplink carriers, for example, an NR uplink carrier and an NR supplementary uplink (Supplementary Uplink, SUL) carrier. For a terminal that sends the preamble on different uplink carriers, RA-RNTIs of RARs corresponding to the terminal are calculated using different uplink carrier index identifiers.

Based on a same concept as the foregoing method embodiments, as shown in FIG. 6, an embodiment of this application further provides a communication apparatus 600. The communication apparatus 600 may be a network device, or may be a module, a chip, or a system on chip deployed in the network device. The communication apparatus 600 includes: a processing unit 601, configured to determine M RACH resource sets, where the M RACH resource sets correspond to N terminal types, the N terminal types are determined based on bandwidth types and/or random access types of terminals, and M and N are positive integers; and a transceiver unit 602, configured to send RACH configuration information to at least one terminal, where the RACH configuration information indicates the M RACH resource sets, the M RACH resource sets are used by the at least one terminal to send a random access request to the network device, and a bandwidth type of any one of the at least one terminal belongs to the bandwidth types for determining the N terminal types.

In a possible implementation, the processing unit 601 is configured to: for one of the M RACH resource sets, determine at least one terminal type corresponding to the RACH resource set, and determine at least one terminal device that performs a random access procedure based on the at least one terminal type. The transceiver unit 602 is configured to send configuration information to the at least one terminal device. The network device allocates RACH resources based on bandwidth types of terminals and random access types, so that resource configuration in a random access procedure is more flexible, and resource utilization is improved.

In a possible implementation, any one of the N terminal types is determined based on one of at least one bandwidth type and/or one of at least one random access type, and a bandwidth type of any one of the at least one terminal is one of the at least one bandwidth type.

In a possible implementation, the RACH configuration information further indicates a first RACH configuration, where the first RACH configuration is that the M RACH resource sets correspond to the N terminal types, M is less than N, and M is equal to 1.

In a possible implementation, the RACH configuration information further indicates a second RACH configuration, where the second RACH configuration is that the M RACH resource sets correspond to the N terminal types, M is equal to N, and M is greater than 1.

In a possible implementation, the RACH configuration information further indicates a third RACH configuration, where the third RACH configuration is that the M RACH resource sets correspond to the N terminal types, M is less than N, and M is greater than 1.

In a possible implementation, the RACH configuration information further indicates a fourth RACH configuration, where the fourth RACH configuration is that the M RACH resource sets correspond to the N terminal types, M is equal to N, and M is equal to 1.

In a possible implementation, the RACH configuration information further indicates one of X RACH configurations, where X is a positive integer, and the X RACH configurations include at least two of the following RACH configurations:
a first RACH configuration, where the first RACH configuration is that the M RACH resource sets correspond to the N terminal types, M is less than N, and M is equal to 1;
a second RACH configuration, where the second RACH configuration is that the M RACH resource sets correspond to the N terminal types, M is equal to N, and M is greater than 1;
a third RACH configuration, where the RACH configuration information indicates the third RACH configuration, the third RACH configuration is that the M RACH resource sets correspond to the N terminal types, M is less than N, and M is greater than 1; or
a fourth RACH configuration, where the fourth RACH configuration is that the M RACH resource sets correspond to the N terminal types, M is equal to N, and M is equal to 1.

In a possible implementation, the RACH configuration information further indicates that the N terminal types correspond to at least one UL initial BWP.

In a possible implementation, the transceiver unit 602 is specifically configured to send the RACH configuration information to the at least one terminal in at least one DL initial BWP.

In a possible implementation, the transceiver unit 602 is specifically configured to send signaling to the at least one terminal, where the signaling includes the RACH configuration information, and the signaling includes at least one of the following types of signaling: MACCE signaling, DCI signaling, RRC signaling, and SIB1 signaling.

In a possible implementation, the transceiver unit 602 is further configured to receive a random access request from a current terminal in the at least one terminal; and the processing unit 601 is further configured to: determine a target RACH resource set corresponding to the random access request; and respond to the random access request based on a PUSCH resource set corresponding to the target RACH resource set.

In a possible implementation, the random access request includes the bandwidth type of the current terminal, and the random access request is sent via message1 or messageA.

In a possible implementation, the bandwidth type of the current terminal is carried on a PRACH of message1, or the bandwidth type of the current terminal is carried on a PRACH or a PUSCH of messageA.

In a possible implementation, the at least one bandwidth type includes at least one of the following bandwidth types: NR_legacy, NR_REDCAP type1, and NR_REDCAP type2;
the at least one random access type includes at least one of the following random access types: 4-step RACH, 4-step RACH&EDT, 2-step RACH, and 2-step RACH&EDT; and
the N terminal types include at least one of the following terminal types:
   a terminal type determined based on NR_legacy and 4-step RACH;
   a terminal type determined based on NR_legacy and 4-step RACH&EDT;
   a terminal type determined based on NR_legacy and 2-step RACH;
   a terminal type determined based on NR_legacy and 2-step RACH&EDT;
   a terminal type determined based on NR_REDCAP type1 and 4-step RACH;
   a terminal type determined based on NR_REDCAP type1 and 4-step RACH&EDT;
   a terminal type determined based on NR_REDCAP type1 and 2-step RACH;
   a terminal type determined based on NR_REDCAP type1 and 2-step RACH&EDT;
   a terminal type determined based on NR_REDCAP type2 and 4-step RACH;
   a terminal type determined based on NR_REDCAP type2 and 4-step RACH&EDT;
   a terminal type determined based on NR_REDCAP type2 and 2-step RACH; or
   a terminal type determined based on NR_REDCAP type2 and 2-step RACH&EDT.

Based on a same concept as the foregoing method embodiments, as shown in FIG. 7, an embodiment of this application further provides a communication apparatus 700. The communication apparatus 700 may be a terminal, or may be a module, a chip, or a system on chip deployed in the terminal. The communication apparatus 700 includes: a transceiver unit 701, configured to receive RACH configuration information from a network device, where the RACH configuration information indicates M RACH resource sets, the M RACH resource sets correspond to N terminal types, the N terminal types are determined based on bandwidth types and/or random access types of terminals, and M and N are positive integers; and a processing unit 702, configured to determine, based on the configuration information, a target RACH resource set used by a current terminal to send a random access request to the network device, where a bandwidth type of the current terminal belongs to the bandwidth types for determining the N terminal types.

In a possible implementation, any one of the N terminal types is determined based on one of at least one bandwidth type and/or one of at least one random access type, and a bandwidth type of any one of the at least one terminal is one of the at least one bandwidth type.

In a possible implementation, the RACH configuration information further indicates a first RACH configuration, where the first RACH configuration is that the M RACH resource sets correspond to the N terminal types, M is less than N, and M is equal to 1.

In a possible implementation, the RACH configuration information further indicates a second RACH configuration, where the second RACH configuration is that the M RACH resource sets correspond to the N terminal types, M is equal to N, and M is greater than 1.

In a possible implementation, the RACH configuration information further indicates a third RACH configuration, where the third RACH configuration is that the M RACH resource sets correspond to the N terminal types, M is less than N, and M is greater than 1.

In a possible implementation, the RACH configuration information further indicates a fourth RACH configuration, where the fourth RACH configuration is that the M RACH resource sets correspond to the N terminal types, M is equal to N, and M is equal to 1.

In a possible implementation, the RACH configuration information further indicates one of X RACH configurations, where X is a positive integer, and the X RACH configurations include at least two of the following RACH configurations:
a first RACH configuration, where the first RACH configuration is that the M RACH resource sets correspond to the N terminal types, M is less than N, and M is equal to 1;
a second RACH configuration, where the second RACH configuration is that the M RACH resource sets correspond to the N terminal types, M is equal to N, and M is greater than 1;
a third RACH configuration, where the third RACH configuration is that the M RACH resource sets correspond to the N terminal types, M is less than N, and M is greater than 1; or
a fourth RACH configuration, where the fourth RACH configuration is that the M RACH resource sets correspond to the N terminal types, M is equal to N, and M is equal to 1.

In a possible implementation, the transceiver unit 701 is specifically configured to receive signaling from the network device, where the signaling includes the configuration information, and the signaling includes at least one of the following types of signaling: MACCE signaling, DCI signaling, SIB1 signaling, and RRC signaling.

In a possible implementation, the processing unit 702 is specifically configured to determine, based on the RACH configuration information and a target terminal type of the current terminal, the target RACH resource set used by the current terminal to send the random access request to the network device, where the target terminal type of the current terminal is determined based on a random access type supported by the current terminal and the bandwidth type of the current terminal.

In a possible implementation, the RACH configuration information further indicates that the N terminal types correspond to at least one UL initial BWP; the processing unit 702 is further configured to determine, based on the configuration information, a target UL initial BWP corresponding to the target terminal type; and the transceiver unit 701 is further configured to send the random access request to the network device on the target UL initial BWP based on the target RACH resource set.

In a possible implementation, the random access request includes the bandwidth type of the current terminal, and the random access request is sent via message1 or messageA.

In a possible implementation, the bandwidth type of the current terminal is carried on a PRACH of message1, or the bandwidth type of the current terminal is carried on a PRACH or a PUSCH of messageA.

In a possible implementation, the at least one bandwidth type includes at least one of the following bandwidth types: NR_legacy, NR_REDCAP type1, and NR_REDCAP type2;
the at least one random access type includes at least one of the following random access types: 4-step RACH, 4-step RACH&EDT, 2-step RACH, and 2-step RACH&EDT; and
the N terminal types include at least one of the following terminal types:
   a terminal type determined based on NR_legacy and 4-step RACH;
   a terminal type determined based on NR_legacy and 4-step RACH&EDT;
   a terminal type determined based on NR_legacy and 2-step RACH;
   a terminal type determined based on NR_legacy and 2-step RACH&EDT;
   a terminal type determined based on NR_REDCAP type1 and 4-step RACH;
   a terminal type determined based on NR_REDCAP type1 and 4-step RACH&EDT;
   a terminal type determined based on NR_REDCAP type1 and 2-step RACH;
   a terminal type determined based on NR_REDCAP type1 and 2-step RACH&EDT;
   a terminal type determined based on NR_REDCAP type2 and 4-step RACH;
   a terminal type determined based on NR_REDCAP type2 and 4-step RACH&EDT;
   a terminal type determined based on NR_REDCAP type2 and 2-step RACH; or
   a terminal type determined based on NR_REDCAP type2 and 2-step RACH&EDT.

It should be noted that when the communication apparatus 600 is the network device, and the communication apparatus 700 is the terminal, the transceiver unit 602 and the transceiver unit 701 may be radio frequency circuits. When the communication apparatus 600 includes a memory, and the memory is configured to store computer instructions, the processing unit 601 is communicatively connected to the memory, and the processing unit 601 executes the computer instructions stored in the memory, so that the communication apparatus 600 performs the method performed by the network device according to any embodiment of this application. When the communication apparatus 700 includes a memory, and the memory is configured to store computer instructions, the processing unit 702 is communicatively connected to the memory, and the processing unit 702 executes the computer instructions stored in the memory, so that the communication apparatus 700 performs the method performed by the terminal according to any embodiment of this application. The processing unit 601 and the processing unit 702 each may be a general-purpose central processing unit (CPU), a microprocessor, or an application-specific integrated circuit (application specific Integrated circuit, ASIC).

It should be noted that when the communication apparatus 600 is the chip deployed in the network device, and the communication apparatus 700 is the chip deployed in the terminal, the transceiver unit 602 and the transceiver unit 701 each may be an input/output interface, a pin, a circuit, or the like. When the communication apparatus 600 includes a memory, and the memory is configured to store computer instructions, the processing unit 601 is communicatively connected to the memory, and the processing unit 601 executes the computer instructions stored in the memory, so that the chip in the network device performs the method performed by the network device according to any embodiment of this application. When the communication apparatus 700 includes a memory, and the memory is configured to store computer instructions, the processing unit 702 is communicatively connected to the memory, and the processing unit 702 executes the computer instructions stored in the memory, so that the chip in the terminal performs the method performed by the terminal according to any embodiment of this application. Optionally, the memory is a storage unit in the chip, for example, a register or a cache. The memory may alternatively be a storage unit, such as a read-only memory (read-only memory, ROM), another type of static storage device that can store static information and instructions, or a random access memory (random access memory, RAM), located outside of the chip in the network device/terminal.

Correspondingly, an embodiment of this application further provides a communication system, including the communication apparatus 600 provided in any embodiment of this application and the communication apparatus 700 provided in any embodiment of this application.

It may be clearly understood by a person skilled in the art that, for the purpose of convenient and brief description, for a specific working process of the communication apparatus 600, the communication apparatus 700, a network device on which the communication apparatus 600 is deployed, or a terminal on which the communication apparatus 700 is deployed, refer to a corresponding process in the foregoing method embodiments. Details are not described herein again.

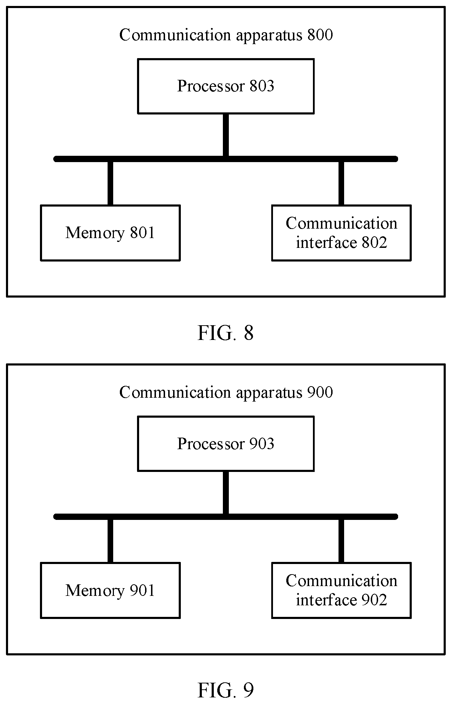

Based on a same concept as the foregoing method embodiments, as shown in FIG. 8, an embodiment of this application further provides a communication apparatus 800. It should be understood that the communication apparatus 800 may perform the steps performed by the network device in the method shown in FIG. 3 or FIG. 4. To avoid repetition, details are not described herein again. The communication apparatus 800 includes:
a memory 801, configured to store a program;
a communication interface 802, configured to communicate with another device; and
a processor 803, configured to execute the program in the memory 801, where when the program is executed, the processor 803 is configured to: determine M RACH resource sets, where the M RACH resource sets correspond to N terminal types, the N terminal types are determined based on bandwidth types and/or random access types of terminals, and M and N are positive integers; and send, through the communication interface 802, RACH configuration information to at least one terminal, where the RACH configuration information indicates the M RACH resource sets, the M RACH resource sets are used by the at least one terminal to send a random access request to a network device, and a bandwidth type of any one of the at least one terminal belongs to the bandwidth types for determining the N terminal types.

It should be understood that the communication apparatus 800 shown in FIG. 8 may be a chip or a circuit, for example, a chip or a circuit that may be disposed in the network device. The communication interface 802 may alternatively be a transceiver. The transceiver includes a receiver and a transmitter. Further, the communication apparatus 800 may further include a bus system.

The processor 803, the memory 801, the receiver, and the transmitter are connected through the bus system. The processor 803 is configured to execute the instructions stored in the memory 801, to control the receiver to receive a signal and control the transmitter to send a signal, to complete the steps performed by the network device in the random access method provided in any embodiment of this application. The receiver and the transmitter may be a same physical entity or different physical entities. When the receiver and the transmitter are a same physical entity, the receiver and the transmitter may be collectively referred to as a transceiver. The memory 801 may be integrated into the processor 803, or may be disposed separately from the processor 803.

In an implementation, functions of the receiver and the transmitter may be considered to be implemented through a transceiver circuit or a dedicated transceiver chip. It may be considered that the processor 803 is implemented using a dedicated processing chip, a processing circuit, a processor, or a general-purpose chip.

Based on a same concept as the foregoing method embodiments, as shown in FIG. 9, an embodiment of this application further provides a communication apparatus 900. It should be understood that the communication apparatus 900 may perform the steps performed by the terminal in the method shown in FIG. 3 or FIG. 4. To avoid repetition, details are not described herein again. The communication apparatus 900 includes: a memory 901, configured to store a program;
a communication interface 902, configured to communicate with another device; and
a processor 903, configured to execute the program in the memory 901, where when the program is executed, the processor 903 is configured to: receive RACH configuration information from a network device through the communication interface 902, where the RACH configuration information indicates M RACH resource sets, the M RACH resource sets correspond to N terminal types, the N terminal types are determined based on bandwidth types and/or random access types of terminals, and M and N are positive integers; and determine, based on the configuration information, a target RACH resource set used by a current terminal to send a random access request to the network device, where a bandwidth type of the current terminal belongs to the bandwidth types for determining the N terminal types.

It should be understood that the communication apparatus 900 shown in FIG. 9 may be a chip or a circuit, for example, a chip or a circuit that may be disposed in the terminal. The communication interface 902 may alternatively be a transceiver. The transceiver includes a receiver and a transmitter. Further, the communication apparatus 900 may further include a bus system.

The processor 903, the memory 901, the receiver, and the transmitter are connected through the bus system. The processor 903 is configured to execute the instructions stored in the memory 901, to control the receiver to receive a signal and control the transmitter to send a signal, to complete the steps performed by the terminal in the random access method provided in any embodiment of this application. The receiver and the transmitter may be a same physical entity or different physical entities. When the receiver and the transmitter are a same physical entity, the receiver and the transmitter may be collectively referred to as a transceiver. The memory 901 may be integrated into the processor 903, or may be disposed separately from the processor 903.

In an implementation, functions of the receiver and the transmitter may be considered to be implemented through a transceiver circuit or a dedicated transceiver chip. It may be considered that the processor 903 is implemented using a dedicated processing chip, a processing circuit, a processor, or a general-purpose chip.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

Different embodiments provided in this application may be combined. In embodiments provided in this application, it should be understood that the disclosed system, apparatus, and method may be implemented in other manners. For example, the described apparatus embodiment is an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual needs to achieve the objectives of embodiments.

In addition, function units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a removable hard disk, a read-only memory, a random access memory, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In this application, "and/or" describes an association relationship between associated objects, and indicates that three relationships may exist. For example, A and/or B may indicate the following three cases: A exists alone, both A and B exist, and B exists alone, where A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are used for differentiation for ease of description, and are not used to limit the scope of embodiments of this application. The sequence numbers of the foregoing processes do not mean an execution sequence, and the execution sequence of the processes should be determined based on functions and internal logic of the processes.

Further embodiments of the present invention are provided in the following. It should be noted that the numbering used in the following section does not necessarily need to comply with the numbering used in the previous sections.
Embodiment 1. A random access method, comprising:
   determining M random access channel RACH resource sets, wherein the M RACH resource sets correspond to N terminal types, the N terminal types are determined based on bandwidth types and/or random access types of terminals, and M and N are positive integers; and
   sending RACH configuration information to at least one terminal, wherein the RACH configuration information indicates the M RACH resource sets, the M RACH resource sets are used by the at least one terminal to send a random access request to a network device, and a bandwidth type of any one of the at least one terminal belongs to the bandwidth types for determining the N terminal types.
Embodiment 2. The method according to embodiment 1, wherein any one of the N terminal types is determined based on one of at least one bandwidth type and/or one of at least one random access type, and a bandwidth type of any one of the at least one terminal is one of the at least one bandwidth type.
Embodiment 3. The method according to embodiment 1, wherein the RACH configuration information further indicates a first RACH configuration, wherein the first RACH configuration is that the M RACH resource sets correspond to the N terminal types, M is less than N, and M is equal to 1.
Embodiment 4. The method according to embodiment 1, wherein the RACH configuration information further indicates a second RACH configuration, wherein the second RACH configuration is that the M RACH resource sets correspond to the N terminal types, M is equal to N, and M is greater than 1.
Embodiment 5. The method according to embodiment 1, wherein the RACH configuration information further indicates a third RACH configuration, wherein the third RACH configuration is that the M RACH resource sets correspond to the N terminal types, M is less than N, and M is greater than 1.
Embodiment 6. The method according to embodiment 1, wherein the RACH configuration information further indicates a fourth RACH configuration, wherein the fourth RACH configuration is that the M RACH resource sets correspond to the N terminal types, M is equal to N, and M is equal to 1.
Embodiment 7. The method according to embodiment 1, wherein the RACH configuration information further indicates one of X RACH configurations, wherein X is a positive integer, and the X RACH configurations comprise at least two of the following RACH configurations:
   a first RACH configuration, wherein the first RACH configuration is that the M RACH resource sets correspond to the N terminal types, M is less than N, and M is equal to 1;
   a second RACH configuration, wherein the second RACH configuration is that the M RACH resource sets correspond to the N terminal types, M is equal to N, and M is greater than 1;
   a third RACH configuration, wherein the RACH configuration information indicates the third RACH configuration, the third RACH configuration is that the M RACH resource sets correspond to the N terminal types, M is less than N, and M is greater than 1; or
   a fourth RACH configuration, wherein the fourth RACH configuration is that the M RACH resource sets correspond to the N terminal types, M is equal to N, and M is equal to 1.
Embodiment 8. The method according to embodiment 1, wherein the RACH configuration information further indicates that the N terminal types correspond to at least one uplink initial bandwidth part UL initial BWP.
Embodiment 9. The method according to embodiment 1, wherein the sending RACH configuration information to at least one terminal comprises: sending the RACH configuration information to the at least one terminal in at least one downlink initial bandwidth part DL initial BWP.
Embodiment 10. The method according to embodiment 1, wherein the sending RACH configuration information to at least one terminal comprises: sending signaling to the at least one terminal, wherein the signaling comprises the RACH configuration information, and the signaling comprises at least one of the following types of signaling: media access control control element MACCE signaling, downlink control information DCI signaling, system information block typel SIB1 signaling, and radio resource control RRC signaling.
Embodiment 11. The method according to any one of embodiments 1 to 10, wherein the method further comprises:
   receiving a random access request from a current terminal in the at least one terminal;
   determining a target RACH resource set corresponding to the random access request; and
   responding to the random access request based on a physical uplink shared channel PUSCH resource set corresponding to the target RACH resource set.
Embodiment 12. The method according to embodiment 11, wherein the random access request comprises a bandwidth type of the current terminal, and the random access request is sent via message1 or messageA.
Embodiment 13. The method according to any one of embodiments 1 to 10, wherein
   the at least one bandwidth type comprises at least one of the following bandwidth types: NR_legacy, NR_REDCAP type1, and NR_REDCAP type2;
   the at least one random access type comprises at least one of the following random access types: 4-step RACH, 4-step RACH&EDT, 2-step RACH, and 2-step RACH&EDT; and
   the N terminal types comprise at least one of the following terminal types:
      a terminal type determined based on NR_legacy and 4-step RACH;
      a terminal type determined based on NR_legacy and 4-step RACH&EDT;
      a terminal type determined based on NR_legacy and 2-step RACH;
      a terminal type determined based on NR_legacy and 2-step RACH&EDT;
      a terminal type determined based on NR_REDCAP type1 and 4-step RACH;
      a terminal type determined based on NR_REDCAP type1 and 4-step RACH&EDT;
      a terminal type determined based on NR_REDCAP type1 and 2-step RACH;
      a terminal type determined based on NR_REDCAP type1 and 2-step RACH&EDT;
      a terminal type determined based on NR_REDCAP type2 and 4-step RACH;
      a terminal type determined based on NR_REDCAP type2 and 4-step RACH&EDT;
      a terminal type determined based on NR_REDCAP type2 and 2-step RACH; or
      a terminal type determined based on NR_REDCAP type2 and 2-step RACH&EDT.
Embodiment 14. A random access method, comprising:
   receiving random access channel RACH configuration information from a network device, wherein the RACH configuration information indicates M RACH resource sets, the M RACH resource sets correspond to N terminal types, the N terminal types are determined based on bandwidth types and/or random access types of terminals, and M and N are positive integers; and
   determining, based on the configuration information, a target RACH resource set used by a current terminal to send a random access request to the network device, wherein a bandwidth type of the current terminal belongs to the bandwidth types for determining the N terminal types.
Embodiment 15. The method according to embodiment 14, wherein any one of the N terminal types is determined based on one of at least one bandwidth type and/or one of at least one random access type, and a bandwidth type of any one of the at least one terminal is one of the at least one bandwidth type.
Embodiment 16. The method according to embodiment 14, wherein the RACH configuration information further indicates a first RACH configuration, wherein the first RACH configuration is that the M RACH resource sets correspond to the N terminal types, M is less than N, and M is equal to 1.
Embodiment 17. The method according to embodiment 14, wherein the RACH configuration information further indicates a second RACH configuration, wherein the second RACH configuration is that the M RACH resource sets correspond to the N terminal types, M is equal to N, and M is greater than 1.
Embodiment 18. The method according to embodiment 14, wherein the RACH configuration information further indicates a third RACH configuration, wherein the third RACH configuration is that the M RACH resource sets correspond to the N terminal types, M is less than N, and M is greater than 1.
Embodiment 19. The method according to embodiment 14, wherein the RACH configuration information further indicates a fourth RACH configuration, wherein the fourth RACH configuration is that the M RACH resource sets correspond to the N terminal types, M is equal to N, and M is equal to 1.
Embodiment 20. The method according to embodiment 14, wherein the RACH configuration information further indicates one of X RACH configurations, wherein X is a positive integer, and the X RACH configurations comprise at least two of the following RACH configurations:
   a first RACH configuration, wherein the first RACH configuration is that the M RACH resource sets correspond to the N terminal types, M is less than N, and M is equal to 1;
   a second RACH configuration, wherein the second RACH configuration is that the M RACH resource sets correspond to the N terminal types, M is equal to N, and M is greater than 1;
   a third RACH configuration, wherein the third RACH configuration is that the M RACH resource sets correspond to the N terminal types, M is less than N, and M is greater than 1; or
   a fourth RACH configuration, wherein the fourth RACH configuration is that the M RACH resource sets correspond to the N terminal types, M is equal to N, and M is equal to 1.
Embodiment 21. The method according to embodiment 14, wherein the receiving RACH configuration information from a network device comprises: receiving signaling from the network device, wherein the signaling comprises the configuration information, and the signaling comprises at least one of the following types of signaling: media access control control element MACCE signaling, downlink control information DCI signaling, system information block type1 SIB1 signaling, and radio resource control RRC signaling.
Embodiment 22. The method according to any one of embodiments 14 to 21, wherein
   the determining, based on the RACH configuration information, a target RACH resource set used by a current terminal to send a random access request to the network device comprises:
   determining, based on the RACH configuration information and a target terminal type of the current terminal, the target RACH resource set used by the current terminal to send the random access request to the network device, wherein the target terminal type of the current terminal is determined based on a random access type supported by the current terminal and the bandwidth type of the current terminal.
Embodiment 23. The method according to embodiment 22, wherein
   the RACH configuration information further indicates that the N terminal types correspond to at least one uplink initial bandwidth part UL initial BWP; and
   the method further comprises:
      determining, based on the configuration information, a target UL initial BWP corresponding to the target terminal type; and
      sending the random access request to the network device on the target UL initial BWP based on the target RACH resource set.
Embodiment 24. The method according to embodiment 23, wherein
   the random access request comprises the bandwidth type of the current terminal, and the random access request is sent via message1 or messageA.
Embodiment 25. The method according to any one of embodiments 14 to 21, wherein
   the at least one bandwidth type comprises at least one of the following bandwidth types: NR_legacy, NR_REDCAP type1, and NR_REDCAP type2;
   the at least one random access type comprises at least one of the following random access types: 4-step RACH, 4-step RACH&EDT, 2-step RACH, and 2-step RACH&EDT; and
   the N terminal types comprise at least one of the following terminal types:
      a terminal type determined based on NR_legacy and 4-step RACH;
      a terminal type determined based on NR_legacy and 4-step RACH&EDT;
      a terminal type determined based on NR_legacy and 2-step RACH;
      a terminal type determined based on NR_legacy and 2-step RACH&EDT;
      a terminal type determined based on NR_REDCAP type1 and 4-step RACH;
      a terminal type determined based on NR_REDCAP type1 and 4-step RACH&EDT;
      a terminal type determined based on NR_REDCAP type1 and 2-step RACH;
      a terminal type determined based on NR_REDCAP type1 and 2-step RACH&EDT;
      a terminal type determined based on NR_REDCAP type2 and 4-step RACH;
      a terminal type determined based on NR_REDCAP type2 and 4-step RACH&EDT;
      a terminal type determined based on NR_REDCAP type2 and 2-step RACH; or
      a terminal type determined based on NR_REDCAP type2 and 2-step RACH&EDT.
Embodiment 26. A communication apparatus, comprising:
   a processing unit, configured to determine M random access channel RACH resource sets, wherein the M RACH resource sets correspond to N terminal types, the N terminal types are determined based on bandwidth types and/or random access types of terminals, and M and N are positive integers; and
   a transceiver unit, configured to send RACH configuration information to at least one terminal, wherein the RACH configuration information indicates the M RACH resource sets, the M RACH resource sets are used by the at least one terminal to send a random access request to a network device, and a bandwidth type of any one of the at least one terminal belongs to the bandwidth types for determining the N terminal types.
Embodiment 27. The communication apparatus according to embodiment 26, wherein any one of the N terminal types is determined based on one of at least one bandwidth type and/or one of at least one random access type, and a bandwidth type of any one of the at least one terminal is one of the at least one bandwidth type.
Embodiment 28. The apparatus according to embodiment 26, wherein the RACH configuration information further indicates a first RACH configuration, wherein the first RACH configuration is that the M RACH resource sets correspond to the N terminal types, M is less than N, and M is equal to 1.
Embodiment 29. The apparatus according to embodiment 26, wherein the RACH configuration information further indicates a second RACH configuration, wherein the second RACH configuration is that the M RACH resource sets correspond to the N terminal types, M is equal to N, and M is greater than 1.
Embodiment 30. The apparatus according to embodiment 26, wherein the RACH configuration information further indicates a third RACH configuration, wherein the third RACH configuration is that the M RACH resource sets correspond to the N terminal types, M is less than N, and M is greater than 1.
Embodiment 31. The apparatus according to embodiment 26, wherein the RACH configuration information further indicates a fourth RACH configuration, wherein the fourth RACH configuration is that the M RACH resource sets correspond to the N terminal types, M is equal to N, and M is equal to 1.
Embodiment 32. The apparatus according to embodiment 26, wherein the RACH configuration information further indicates one of X RACH configurations, wherein X is a positive integer, and the X RACH configurations comprise at least two of the following RACH configurations:
   a first RACH configuration, wherein the first RACH configuration is that the M RACH resource sets correspond to the N terminal types, M is less than N, and M is equal to 1;
   a second RACH configuration, wherein the second RACH configuration is that the M RACH resource sets correspond to the N terminal types, M is equal to N, and M is greater than 1;
   a third RACH configuration, wherein the RACH configuration information indicates the third RACH configuration, the third RACH configuration is that the M RACH resource sets correspond to the N terminal types, M is less than N, and M is greater than 1; or
   a fourth RACH configuration, wherein the fourth RACH configuration is that the M RACH resource sets correspond to the N terminal types, M is equal to N, and M is equal to 1.
Embodiment 33. The apparatus according to embodiment 26, wherein the RACH configuration information further indicates that the N terminal types correspond to at least one uplink initial bandwidth part UL initial BWP.
Embodiment 34. The apparatus according to embodiment 26, wherein the transceiver unit is configured to send the RACH configuration information to the at least one terminal in at least one downlink initial bandwidth part DL initial BWP.
Embodiment 35. The apparatus according to embodiment 26, wherein the transceiver unit is configured to send signaling to the at least one terminal, wherein the signaling comprises the RACH configuration information, and the signaling comprises at least one of the following types of signaling: media access control control element MACCE signaling, downlink control information DCI signaling, system information block type1 SIB1 signaling, and radio resource control RRC signaling.
Embodiment 36. The apparatus according to any one of embodiments 26 to 35, wherein
   the transceiver unit is further configured to receive a random access request from a current terminal in the at least one terminal; and
   the processing unit is further configured to: determine a target RACH resource set corresponding to the random access request; and respond to the random access request based on a physical uplink shared channel PUSCH resource set corresponding to the target RACH resource set.
Embodiment 37. The apparatus according to embodiment 36, wherein the random access request comprises a bandwidth type of the current terminal, and the random access request is sent via message1 or messageA.
Embodiment 38. The apparatus according to any one of embodiments 26 to 35, wherein
   the at least one bandwidth type comprises at least one of the following bandwidth types: NR_legacy, NR_REDCAP type1, and NR_REDCAP type2;
   the at least one random access type comprises at least one of the following random access types: 4-step RACH, 4-step RACH&EDT, 2-step RACH, and 2-step RACH&EDT; and
   the N terminal types comprise at least one of the following terminal types:
      a terminal type determined based on NR_legacy and 4-step RACH;
      a terminal type determined based on NR_legacy and 4-step RACH&EDT;
      a terminal type determined based on NR_legacy and 2-step RACH;
      a terminal type determined based on NR_legacy and 2-step RACH&EDT;
      a terminal type determined based on NR_REDCAP type1 and 4-step RACH;
      a terminal type determined based on NR_REDCAP type1 and 4-step RACH&EDT;
      a terminal type determined based on NR_REDCAP type1 and 2-step RACH;
      a terminal type determined based on NR_REDCAP type1 and 2-step RACH&EDT;
      a terminal type determined based on NR_REDCAP type2 and 4-step RACH;
      a terminal type determined based on NR_REDCAP type2 and 4-step RACH&EDT;
      a terminal type determined based on NR_REDCAP type2 and 2-step RACH; or
      a terminal type determined based on NR_REDCAP type2 and 2-step RACH&EDT.
Embodiment 39. A communication apparatus, comprising:
   a transceiver unit, configured to receive random access channel RACH configuration information from a network device, wherein the RACH configuration information indicates M RACH resource sets, the M RACH resource sets correspond to N terminal types, the N terminal types are determined based on bandwidth types and/or random access types of terminals, and M and N are positive integers; and
   a processing unit, configured to determine, based on the configuration information, a target RACH resource set used by a current terminal to send a random access request to the network device, wherein a bandwidth type of the current terminal belongs to the bandwidth types for determining the N terminal types.
Embodiment 40. The apparatus according to embodiment 39, wherein any one of the N terminal types is determined based on one of at least one bandwidth type and/or one of at least one random access type, and a bandwidth type of any one of the at least one terminal is one of the at least one bandwidth type.
Embodiment 41. The apparatus according to embodiment 39, wherein the RACH configuration information further indicates a first RACH configuration, wherein the first RACH configuration is that the M RACH resource sets correspond to the N terminal types, M is less than N, and M is equal to 1.
Embodiment 42. The apparatus according to embodiment 39, wherein the RACH configuration information further indicates a second RACH configuration, wherein the second RACH configuration is that the M RACH resource sets correspond to the N terminal types, M is equal to N, and M is greater than 1.
Embodiment 43. The apparatus according to embodiment 39, wherein the RACH configuration information further indicates a third RACH configuration, wherein the third RACH configuration is that the M RACH resource sets correspond to the N terminal types, M is less than N, and M is greater than 1.
Embodiment 44. The apparatus according to embodiment 39, wherein the RACH configuration information further indicates a fourth RACH configuration, wherein the fourth RACH configuration is that the M RACH resource sets correspond to the N terminal types, M is equal to N, and M is equal to 1.
Embodiment 45. The apparatus according to embodiment 39, wherein the RACH configuration information further indicates one of X RACH configurations, wherein X is a positive integer, and the X RACH configurations comprise at least two of the following RACH configurations:
   a first RACH configuration, wherein the first RACH configuration is that the M RACH resource sets correspond to the N terminal types, M is less than N, and M is equal to 1;
   a second RACH configuration, wherein the second RACH configuration is that the M RACH resource sets correspond to the N terminal types, M is equal to N, and M is greater than 1;
   a third RACH configuration, wherein the third RACH configuration is that the M RACH resource sets correspond to the N terminal types, M is less than N, and M is greater than 1; or
   a fourth RACH configuration, wherein the fourth RACH configuration is that the M RACH resource sets correspond to the N terminal types, M is equal to N, and M is equal to 1.
Embodiment 46. The apparatus according to embodiment 39, wherein the transceiver unit is further configured to receive signaling from the network device, wherein the signaling comprises the configuration information, and the signaling comprises at least one of the following types of signaling: media access control control element MACCE signaling, downlink control information DCI signaling, system information block type1 SIB1 signaling, and radio resource control RRC signaling.
Embodiment 47. The apparatus according to any one of embodiments 39 to 46, wherein the processing unit is configured to determine, based on the RACH configuration information and a target terminal type of the current terminal, the target RACH resource set used by the current terminal to send the random access request to the network device, wherein the target terminal type of the current terminal is determined based on a random access type supported by the current terminal and the bandwidth type of the current terminal.
Embodiment 48. The apparatus according to embodiment 47, wherein the RACH configuration information further indicates that the N terminal types correspond to at least one uplink initial bandwidth part UL initial BWP;
   the processing unit is further configured to determine, based on the configuration information, a target UL initial BWP corresponding to the target terminal type; and
   the transceiver unit is further configured to send the random access request to the network device on the target UL initial BWP based on the target RACH resource set.
Embodiment 49. The apparatus according to embodiment 48, wherein the random access request comprises the bandwidth type of the current terminal, and the random access request is sent via message1 or messageA.
Embodiment 50. The apparatus according to any one of embodiments 39 to 46, wherein
   the at least one bandwidth type comprises at least one of the following bandwidth types: NR_legacy, NR_REDCAP type1, and NR_REDCAP type2;
   the at least one random access type comprises at least one of the following random access types: 4-step RACH, 4-step RACH&EDT, 2-step RACH, and 2-step RACH&EDT; and
   the N terminal types comprise at least one of the following terminal types:
      a terminal type determined based on NR_legacy and 4-step RACH;
      a terminal type determined based on NR_legacy and 4-step RACH&EDT;
      a terminal type determined based on NR_legacy and 2-step RACH;
      a terminal type determined based on NR_legacy and 2-step RACH&EDT;
      a terminal type determined based on NR_REDCAP type1 and 4-step RACH;
      a terminal type determined based on NR_REDCAP type1 and 4-step RACH&EDT;
      a terminal type determined based on NR_REDCAP type1 and 2-step RACH;
      a terminal type determined based on NR_REDCAP type1 and 2-step RACH&EDT;
      a terminal type determined based on NR_REDCAP type2 and 4-step RACH;
      a terminal type determined based on NR_REDCAP type2 and 4-step RACH&EDT;
      a terminal type determined based on NR_REDCAP type2 and 2-step RACH; or
      a terminal type determined based on NR_REDCAP type2 and 2-step RACH&EDT.
Embodiment 51. A communication apparatus, configured to implement the method according to any one of embodiments 1 to 13.
Embodiment 52. A communication apparatus, configured to implement the method according to any one of embodiments 14 to 25.
Embodiment 53. A communication apparatus, comprising a memory and a processor, wherein the memory stores instructions/code; and when executing the instructions/code stored in the memory, the processor implements the method according to any one of embodiments 1 to 13.
Embodiment 54. A communication apparatus, comprising a memory and a processor, wherein the memory stores instructions/code; and when executing the instructions/code stored in the memory, the processor implements the method according to any one of embodiments 14 to 25.
Embodiment 55. A chip, comprising a processor, configured to invoke a computer program from a memory and run the computer program, so that a communication device on which the chip is installed is enabled to perform the method according to any one of embodiments 1 to 13 or the method according to any one of embodiments 14 to 25.
Embodiment 56. A computer-readable storage medium, configured to store instructions/code, wherein when the instructions/code are/is executed by a processor of an electronic device, the electronic device is enabled to implement the method according to any one of embodiments 1 to 13.
Embodiment 57. A computer-readable storage medium, configured to store instructions/code, wherein when the instructions/code are/is executed by a processor of an electronic device, the electronic device is enabled to implement the method according to any one of embodiments 14 to 25.
Embodiment 58. A computer program product comprising instructions/code, wherein when the computer program product runs on an electronic device, the electronic device implements the method according to any one of embodiments 1 to 13 or the method according to any one of embodiments 14 to 25.
Embodiment 59. A communication system, comprising the communication apparatus according to embodiment 53 and the communication apparatus according to embodiment 54.

Finally, it should be noted that the foregoing embodiments are merely intended for describing the technical solutions of this application, but not for limiting this application. Although this application is described in detail with reference to the foregoing embodiments, a person of ordinary skill in the art should understand that they may still make modifications to the technical solutions provided in the foregoing embodiments or make equivalent replacements to some technical features thereof, without departing from the spirit and scope of the technical solutions of embodiments of this application.

## Claims

1. A random access method, comprising:
determining M random access channel, RACH, resource sets, wherein the M RACH resource sets correspond to N terminal types, the N terminal types are determined based on bandwidth types and/or random access types of terminals, and M and N are positive integers;
sending a system information block 1, SIB1, on a downlink, DL, initial bandwidth part, BWP, to at least one terminal, wherein the SIB1 comprises RACH configuration information, wherein the RACH configuration information indicates the M RACH resource sets, wherein the SIB1 further configures at least one uplink, UL, initial BWP corresponding to the N terminal types.

2. The method according to claim 1, wherein
a bandwidth type of the at least one terminal is NR_legacy or NR_REDCAP type2, wherein a maximum bandwidth that a terminal of bandwidth type NR_legacy supports is 100MHz, and a maximum bandwidth that a terminal of bandwidth type NR_REDCAP type2 supports is 20MHz;
each of the M RACH resource sets includes a combination of a time domain resource, a frequency domain resource, and an orthogonal code sequence resource of a RACH.

3. The method according to claim 1 or 2, wherein
the RACH configuration information further indicates a first RACH configuration or a second RACH configuration, wherein the first RACH configuration is that the M RACH resource sets correspond to the N terminal types, M is less than N, and M is equal to 1;
the second RACH configuration is that the M RACH resource sets correspond to the N terminal types, M is equal to N, and M is greater than 1.

4. The method according to any one of claims 1 to 3, wherein
a terminal of bandwidth type NR_REDCAP type2 and a terminal of bandwidth type NR_legacy correspond to a same UL initial BWP.

5. The method according to claim 4, wherein
the same UL initial BWP is for receiving random access requests on a first RACH resource set from a terminal of a terminal type determined based on NR_legacy and 4-step RACH and a terminal of a terminal type determined based on NR_REDCAP type2 and 4-step RACH; or
the same UL initial BWP is for receiving random access requests on a fifth RACH resource set from a terminal of a terminal type determined based on NR_REDCAP type2 and 4-step RACH and on a ninth RACH resource set from a terminal of a terminal type determined based on NR _legacy and 4-step RACH.

6. The method according to any one of claims 1 to 3, wherein
a terminal of a bandwidth type NR _REDCAP type2 corresponds to a second UL initial BWP, a terminal of a bandwidth type NR_legacy corresponds to a third UL initial BWP.

7. The method according to claim 6, wherein
the second UL initial BWP is for receiving random access request on a first RACH resource set from a terminal of a terminal type determined based on NR_legacy and 4-step RACH, the third UL initial BWP is for receiving random access request on the first RACH resource set from a terminal of a terminal type determined based on NR_REDCAP type2 and 4-step RACH; or
the second UL initial BWP is for receiving random access request on a fifth RACH resource set from a terminal of a terminal type determined based on NR_legacy and 4-step RACH, the third UL initial BWP is for receiving random access request on the ninth RACH resource set from a terminal of a terminal type determined based on NR_REDCAP type2 and 4-step RACH.

8. An apparatus, comprising:
means for determining M random access channel, RACH, resource sets, wherein the M RACH resource sets correspond to N terminal types, the N terminal types are determined based on bandwidth types and/or random access types of terminals, and M and N are positive integers;
means for sending a system information block 1, SIB1, on a downlink, DL, initial bandwidth part, BWP, to at least one terminal, wherein the SIB1 comprises RACH configuration information, wherein the RACH configuration information indicates the M RACH resource sets, wherein the SIB1 further configures at least one uplink, UL, initial BWP corresponding to the N terminal types.

9. The apparatus according to claim 8, wherein a bandwidth type of the at least one terminal is NR_legacy or NR_REDCAP type2, wherein a maximum bandwidth that a terminal of bandwidth type NR_legacy supports is 100MHz, and a maximum bandwidth that a terminal of bandwidth type NR_REDCAP type2 supports is 20MHz;
each of the M RACH resource sets includes a combination of a time domain resource, a frequency domain resource, and an orthogonal code sequence resource of a RACH.

10. The apparatus according to claim 8 or 9, wherein
the RACH configuration information further indicates a first RACH configuration or a second RACH configuration, wherein the first RACH configuration is that the M RACH resource sets correspond to the N terminal types, M is less than N, and M is equal to 1;
the second RACH configuration is that the M RACH resource sets correspond to the N terminal types, M is equal to N, and M is greater than 1.

11. The apparatus according to any one of claims 8 to 10, wherein
a terminal of bandwidth type NR_REDCAP type2 and a terminal of bandwidth type NR_legacy correspond to a same UL initial BWP.

12. The apparatus according to claim 11, wherein
the same UL initial BWP is for receiving random access requests on a first RACH resource set from a terminal of a terminal type determined based on NR_legacy and 4-step RACH and a terminal of a terminal type determined based on NR_REDCAP type2 and 4-step RACH; or
the same UL initial BWP is for receiving random access requests on a fifth RACH resource set from a terminal of a terminal type determined based on NR_REDCAP type2 and 4-step RACH and on a ninth RACH resource set from a terminal of a terminal type determined based on NR _legacy and 4-step RACH.

13. The apparatus according to any one of claims 8 to 10, wherein
a terminal of a bandwidth type NR_REDCAP type2 corresponds to a second UL initial BWP, a terminal of a bandwidth type NR_legacy corresponds to a third UL initial BWP.

14. The apparatus according to claim 13, wherein the second UL initial BWP is for receiving random access request on a first RACH resource set from a terminal of a terminal type determined based on NR_legacy and 4-step RACH, the third UL initial BWP is for receiving random access request on the first RACH resource set from a terminal of a terminal type determined based on NR_REDCAP type2 and 4-step RACH; or
the second UL initial BWP is for receiving random access request on a fifth RACH resource set from a terminal of a terminal type determined based on NR_legacy and 4-step RACH, the third UL initial BWP is for receiving random access request on the ninth RACH resource set from a terminal of a terminal type determined based on NR_REDCAP type2 and 4-step RACH.

15. A computer-readable storage medium, configured to store instructions/code, wherein when the instructions/code are/is executed by a processor of an electronic device, the electronic device is enabled to implement the method according to any one of claims 1 to 7.
